# EUROPEAN PATENT APPLICATION

(11) **EP 4 020 279 A1**
(43) Date of publication of application: **29.06.2022**
(21) Application number: 21197926.5
(22) Date of filing: 21.09.2021
(51) Int. Cl.: G06F 21/55, G06F 21/75

(54) **HARDENING STORE HARDWARE AGAINST SPECULATION VULNERABILITIES**

(30) Priority: 26.12.2020 US 202017134350
(71) Applicant: INTEL Corporation, Santa Clara, CA 95054 (US)
(72) Inventor: Rozas, Carlos, Portland OR, 97229 (US); Liu, Fangfei, Hillsboro OR, 97124 (US); Zou, Xiang, Portland OR, 97229 (US); McKeen, Francis, Portland OR, 97229 (US); Brandt, Jason W., Austin TX, 78703 (US); Nuzman, Joseph, 34381 Haifa HA (IL); Alameldeen, Alaa, Hillsboro OR, 97124 (US); Basak, Abhishek, Bothell WA, 98012 (US); Constable, Scott, Portland OR, 97229 (US); Unterluggauer, Thomas, Hillsboro OR, 97124 (US); Mallick, Asit, Saratoga CA, 95070 (US); Fernandez, Matthew, Portland OR, 97209 (US)
(74) Representative: Samson & Partner Patentanwälte mbB

(57) **Abstract**

Embodiments for dynamically mitigating speculation vulnerabilities are disclosed. In an embodiment, an apparatus includes a decode circuitry and store circuitry coupled to the decode circuitry. The decode circuitry is to decode a store hardening instruction to mitigate vulnerability to a speculative execution attack. The store circuitry is to be hardened in response to the store hardening instruction.

## Description

### FIELD OF INVENTION

The field of invention relates generally to computers, and, more specifically, to computer system security.

### BACKGROUND

Computer systems may be vulnerable to attempts by adversaries to obtain confidential, private, or secret information. For example, attacks such as MDS (Microarchitectural Data Sampling), Spectre, and Meltdown exploit speculative and out-of-order execution capabilities of processors to illicitly read data through side-channel analysis.

### BRIEF DESCRIPTION OF THE DRAWINGS

The present invention is illustrated by way of example and not limitation in the figures of the accompanying drawings, in which like references indicate similar elements and in which:
**Figure 1A** illustrates a system for mitigation of speculation vulnerabilities according to embodiments;
**Figure 1B** illustrates a method for mitigation of speculation vulnerabilities according to embodiments;
**Figure 1C** illustrates a method for mitigation of speculation vulnerabilities according to embodiments;
**Figure 1D** illustrates a method for mitigation of speculation vulnerabilities according to embodiments;
**Figure 2A** illustrates a memory access topology diagram created according to embodiments;
**Figure 2B** illustrates hardware for access distancing according to embodiments;
**Figure 2C** illustrates a method of access distancing according to embodiments;
**Figure 3A** illustrates a system for hybrid-key-based web browsing according to embodiments;
**Figure 3B** illustrates a method for hybrid-key-based web browsing according to embodiments;
**Figure 4A** is a block diagram illustrating a generic vector friendly instruction format and class A instruction templates thereof according to embodiments;
**Figure 4B** is a block diagram illustrating the generic vector friendly instruction format and class B instruction templates thereof according to embodiments;
**Figure 5A** is a block diagram illustrating an exemplary specific vector friendly instruction format according to embodiments;
**Figure 5B** is a block diagram illustrating the fields of the specific vector friendly instruction format that make up the full opcode field according to embodiments;
**Figure 5C** is a block diagram illustrating the fields of the specific vector friendly instruction format that make up the register index field according to embodiments;
**Figure 5D** is a block diagram illustrating the fields of the specific vector friendly instruction format that make up the augmentation operation field according to embodiments;
**Figure 6** is a block diagram of a register architecture according to embodiments;
**Figure 7A** is a block diagram illustrating both an exemplary in-order pipeline and an exemplary register renaming, out-of-order issue/execution pipeline according to embodiment;
**Figure 7B** is a block diagram illustrating both an exemplary embodiment of an in-order architecture core and an exemplary register renaming, out-of-order issue/execution architecture core to be included in a processor according to embodiments;
**Figure 8A** is a block diagram of a single processor core, along with its connection to the on-die interconnect network and with its local subset of the Level 2 (L2) cache, according to embodiments;
**Figure 8B** is an expanded view of part of the processor core in **Figure 8A** according to embodiments;
**Figure 9** is a block diagram of a processor that may have more than one core, may have an integrated memory controller, and may have integrated graphics according to embodiments;
**Figure 10** shows a block diagram of a system according to embodiments;
**Figure 11** is a block diagram of a first more specific exemplary system according to embodiments;
**Figure 12** is a block diagram of a second more specific exemplary system according to embodiments;
**Figure 13** is a block diagram of a System-on-a-Chip (SoC) according to embodiments; and
**Figure 14** is a block diagram contrasting the use of a software instruction converter to convert binary instructions in a source instruction set to binary instructions in a target instruction set according to embodiments.

### DETAILED DESCRIPTION

In the following description, numerous specific details are set forth. However, it is understood that embodiments may be practiced without these specific details. In other instances, well-known circuits, structures, and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

As used in this specification and the claims and unless otherwise specified, the use of the ordinal adjectives "first," "second," "third," etc. to describe an element merely indicates that a particular instance of an element or different instances of like elements are being referred to, and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments

The term "core" may mean any processor or execution core, as described and/or illustrated in this specification and its drawings and/or as known in the art, and the terms "processor core," "execution core," and "core" are meant to be synonymous. The term "uncore" may mean any circuitry, logic, sub-systems, etc. (e.g., an integrated memory controller (iMC), power management unit, performance monitoring unit, system and/or I/O controllers, etc.) in/on a processor or system-on-chip (SoC) but not within a core, as described and/or illustrated in this specification and its drawings and/or as known in the art (e.g., by the name uncore, system agent, etc.). However, use of the terms core and uncore in in the description and figures does not limit the location of any circuitry, hardware, structure, etc., as the location of circuitry, hardware, structure, etc. may vary in various embodiments.

For example, the term "MSR" may be used as an acronym for model or machine specific register, but may be used more generally to refer to and/or represent one or more registers or storage locations, one or more of which may be in a core, one or more of which may be in an uncore, etc. MSRs included in embodiments, as described below, may correspond to any one or more model specific registers, machine specific registers, etc. to control and report on processor performance, handle system related functions, etc. Accordingly, descriptions of embodiments including MSRs may not be limited to the use of MSRs as described; embodiments may in addition or instead use any other storage for control, configuration, state, etc. information. In various embodiments, MSRs (or any set or subset of MSRs) may or may not be accessible to application and/or user-level software. In various embodiments, MSRs (or any set or subset of MSRs) may be within and/or accessible by a core (core-scoped) or within an uncore and/or accessible by more than one core (package-scoped).

Many processors and processor cores support capabilities to increase performance, such as caching, multithreading, out-of-order execution, branch prediction, and speculative execution. Adversaries have found ways to exploit capabilities of these processors to illicitly read data. For example, a speculation vulnerability (SV) may arise when different execution paths are taken at a speculation point in the executing code. In particular, a speculation vulnerability may arise because, for example, two different execution paths may be taken after a speculation point in the process flow. A first path may eventually be determined to be a correct path, so instructions on this path may be retired and allowed to modify the architectural state of the processor. A second path may eventually be determined to be an incorrect path, so instructions on this path would be squashed. However, some changes to the microarchitectural state, such as changes to a cache, may persist and/or be observable.

For example, an adversary might intentionally attempt to read data (e.g., secret data) from a memory location that should not be readable by it (i.e., out-of-bounds). The read might be allowed to proceed speculatively until it is determined whether the access is out-of-bounds. The architectural correctness of the system might be ensured by not committing any results until the determination is made. In such cases, the speculative execution might cause the microarchitectural state of the processor to change before the determination is made, and the adversary might be able to perform side-channel analysis to infer the value of the secret data from differences in the microarchitectural state of the processor. Many variants of this type of speculative attack are possible. In one scenario, the adversary might speculatively use the secret data as part of a memory address, and, using a timing analysis to determine what memory locations are being loaded into a cache, infer the value.

As a more specific example, with a cache line size of 64 bytes, a change to any of the six least-significant bits of a memory address does not cause the address to refer to a different cache line, but a change to the seventh least-significant bit does cause the address to refer to a different cache line. Therefore, an adversary might repeatedly (e.g., to eliminate noise and/or achieve a statistically significant result) flush and/or fill a cache to a known or predictable state, use a speculative flow to cause a processor to speculatively access secret data, speculatively apply a bit of the secret data to the seventh least-significant bit of a known memory address stored in a register (e.g., using shift and/or other bit manipulation instructions), speculatively access their own memory space with the manipulated memory address, use a timing side-channel analysis to determine if a new cache line loaded, and infer whether the value of the secret bit was the same as or different from the value of the seventh least-significant bit of the known memory address.

Embodiments include systems, methods, and apparatuses providing features or characteristics that may be desirable for use in a variety of computer systems for a variety of reasons, including to reduce vulnerability to attacks based on speculation or side-channel analysis; to reduce vulnerability to such analysis with less cost, in performance or otherwise, than an alternative approach; and/or to improve security in general. Embodiments may provide dynamic full-stack security to enhance safe, efficient speculation. For example, a comprehensive hardware and software co-design may include hardware mitigation mechanisms and detection capabilities to help decide how to mitigate and software may determine when to apply mitigation. That is, software may decline to apply hardware mitigation mechanisms when the software and/or hardware determine(s) that it may be unsafe to speculate. Embodiments may also include software-visible instructions to allow software to trigger application of hardware mitigation mechanisms (one, all, or in any combination, as may be specified by the instruction(s) and/or programming/configuration by software/firmware/hardware on a per mechanism, per vulnerability/attack type basis, and/or a combined/group basis, as may be further described below). Such an instruction set architecture design may project a new software safety speculation model onto the microarchitecture.

Usages of embodiments may be desired because they may provide dynamic SV mitigation capabilities that may be effective in balancing tradeoffs between security and performance, particularly when observable side effects of speculative execution are transient. Embodiments may provide for varying and/or custom levels of mitigation to increase security when speculation vulnerabilities are present and/or likely to be present and to increase performance when speculation vulnerabilities are not present and/or not likely to be present.

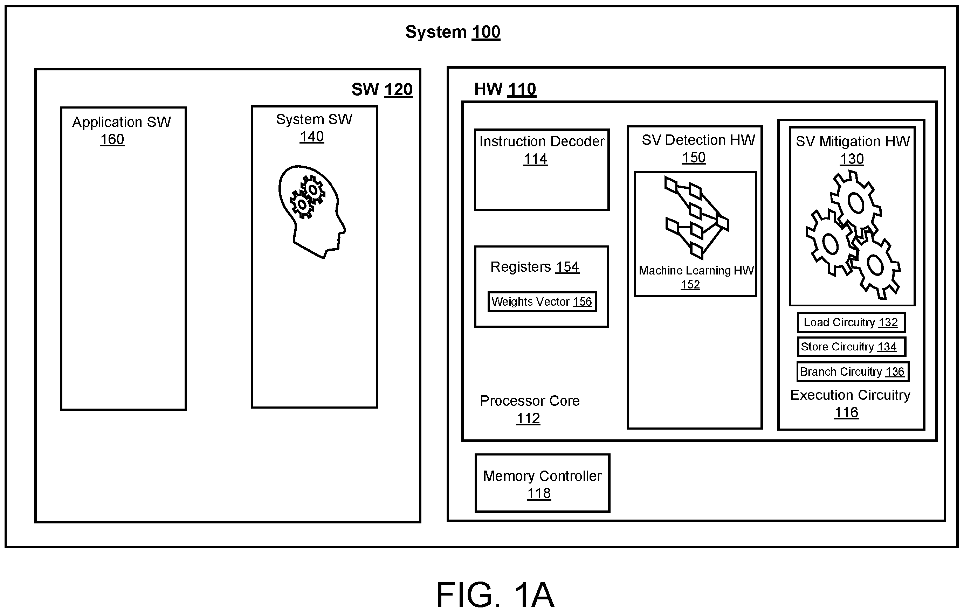

Aspects of some embodiments are illustrated in **Figure 1A****,** which shows system 100 including hardware (HW) 110 and software (SW) 120. In embodiments, HW 110 and SW 120 may work together to provide for applications on and/or users of system 100 to create their own SV mitigation experience.

Hardware 110 includes SV mitigation HW 130, which represents any one or more hardware mechanisms or switches to mitigate SVs, including known hardware mechanisms and/or novel hardware mechanisms described in this specification. Such hardware mechanisms may include any one or more execution modes that may be referred to as restricted speculative execution (RSE), that may be opted into or out of by software, and that may provide protection against and/or mitigation of persistent side effects left during or following speculative execution.

HW 110 also includes SV detection HW 150, which represents any one or more known or novel hardware mechanisms to dynamically detect SVs and/or the conditions under which they may occur. SV detection HW 150 may detect conditions or anomalies that may be used to predict, with various levels of confidence, speculation vulnerabilities. In embodiments, SV detection HW 150 may use machine learning and/or data analytics techniques, implemented in hardware 152, for SV detection, prediction, and/or prediction confidence level determination.

SW 120 includes system SW 140, such as an operating system (OS), that may use information, such as predictions of SV and corresponding confidence levels of the predictions, from SV detection HW 150 to dynamically decide when to use SV mitigation HW 130 and which of its capabilities to use. System SW 140 may interface with SV detection HW 150 via registers, such as model or machine specific registers (MSRs). System SW 140 may also or instead utilize instruction set architecture (ISA) instructions to invoke capabilities of the hardware 110. Example embodiments of some such instructions are discussed below.

In embodiments, one or more registers (e.g., MSRs) 154 may be used to store information, generated by SV detection HW 150, about the category of an attack and the associated prediction confidence, which system SW 140 could read and use to balance and attempt to optimize a tradeoff between security and performance. For example, system SW 140 might turn on no mitigation based on a low confidence prediction of a first category of attack (e.g., Spectre), but turn on RSE (e.g., using one or more novel instructions as described below) based on a high confidence prediction of a second category of attack.

SW 120 also includes application SW 160. Application SW 160 and/or system 100 may be protected from an attack (e.g., malicious code leveraging application SW 160 through injection, hijacking, etc.).

As shown in **Figure 1A****,** HW 110 also includes processor core 112, including instruction decoder 114, execution circuitry 116, and memory controller 118. Execution circuitry 116 may include load circuitry 132, store circuitry 134, and branch circuitry 136. Execution circuitry 116, load circuitry 132, store circuitry 134, and/or branch circuitry 136 (and/or structures of, micro-architecture within, etc.) may pre-configured, configured, and/or reconfigured to implement SV mitigation, for example as described above and below, according to embodiments.

Instruction decoder 114 may be implemented in decode circuitry and may be to receive, decode, translate, convert, and/or otherwise process instructions, e.g., from system software 140 and application software 160. Memory controller 118 may be to couple processor core 112 to a memory, e.g., a system memory to store instructions from system software 140 and application software 160.

In various embodiments, various arrangement and/or integration of the hardware shown in **Figure 1A****,** in/on one or more substrates, chiplets, multichip modules, packages, etc., are possible. For example, all of the hardware shown may be fabricated on the same substrate (e.g., semiconductor chip or die, SoC, etc.), along with additional hardware not shown (e.g., additional processor cores, which may be additional instances of core 112 or instances of any other core). A system memory may be on one or more separate substrates and/or in one or more packages separate from the package containing HW 110.

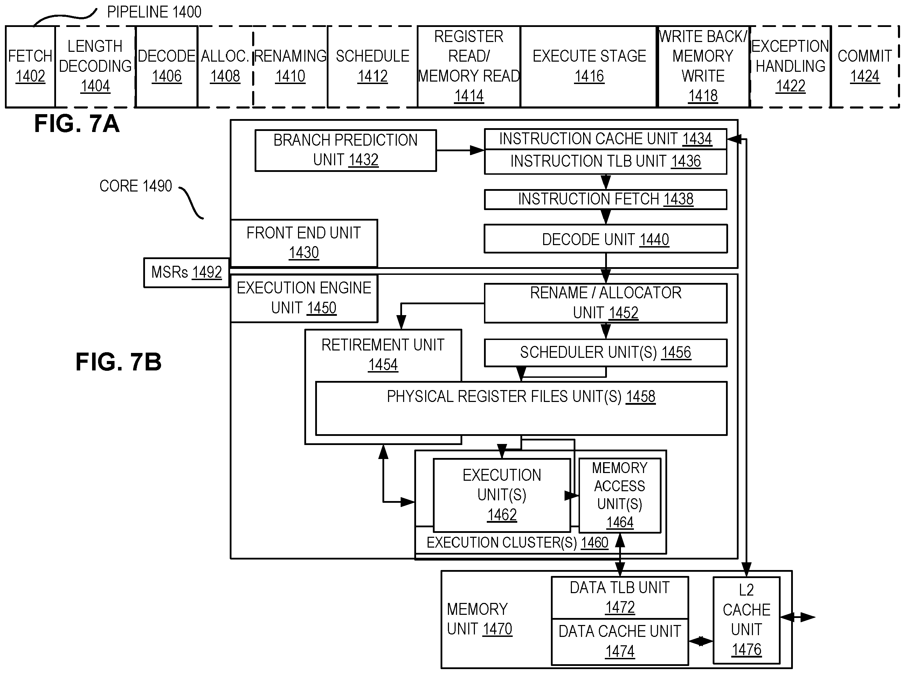

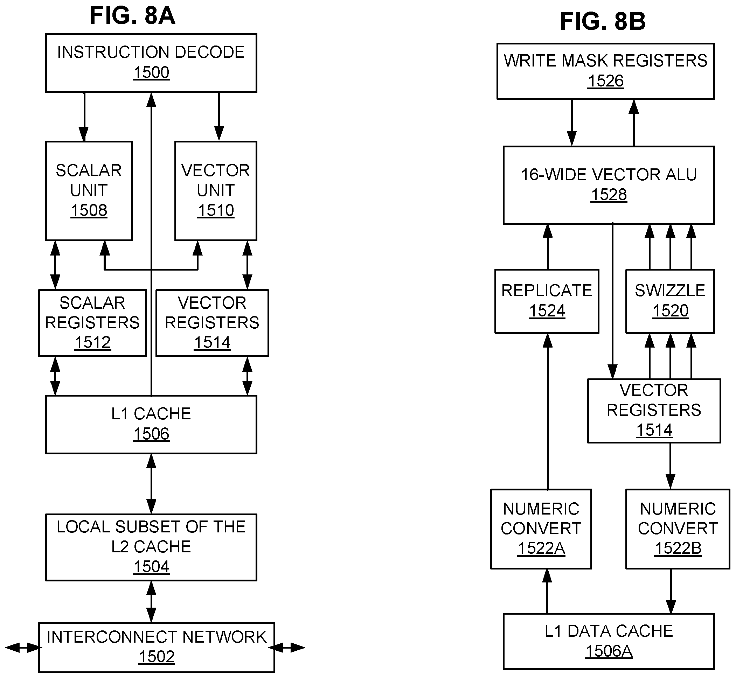

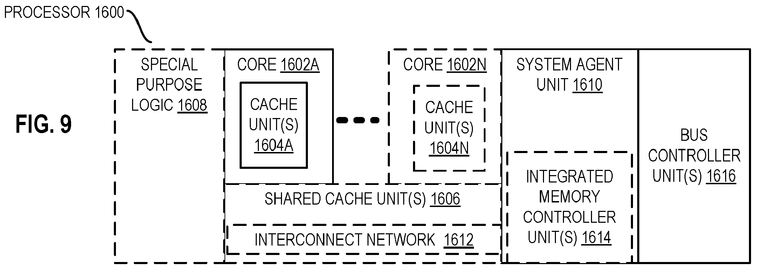

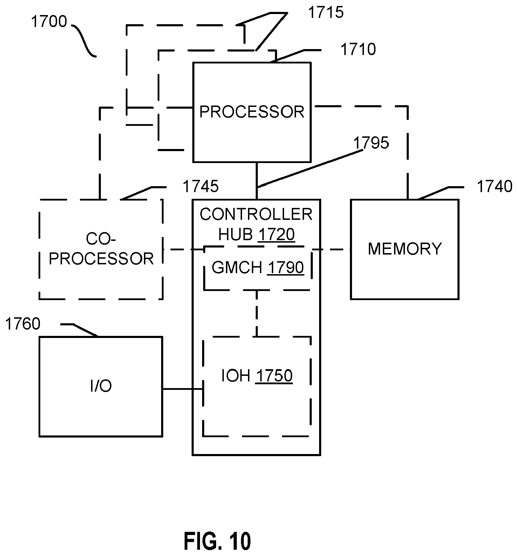

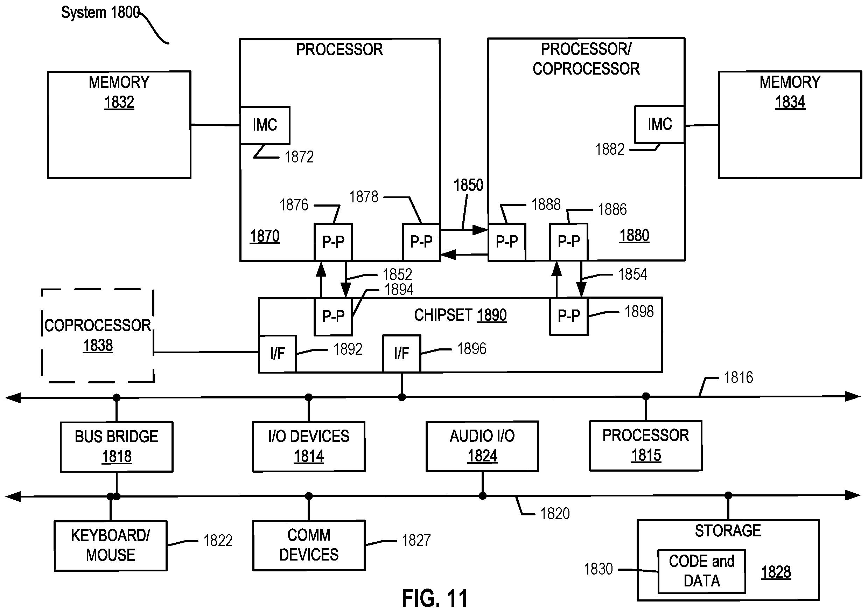

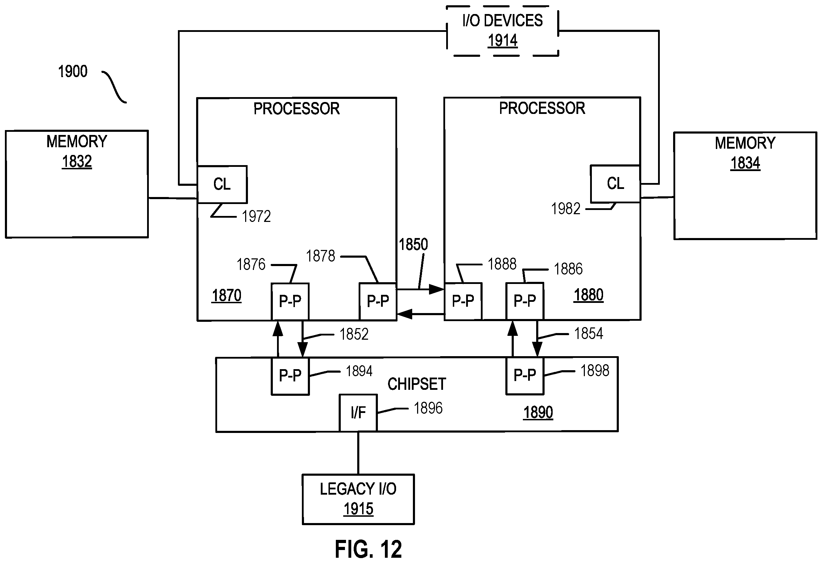

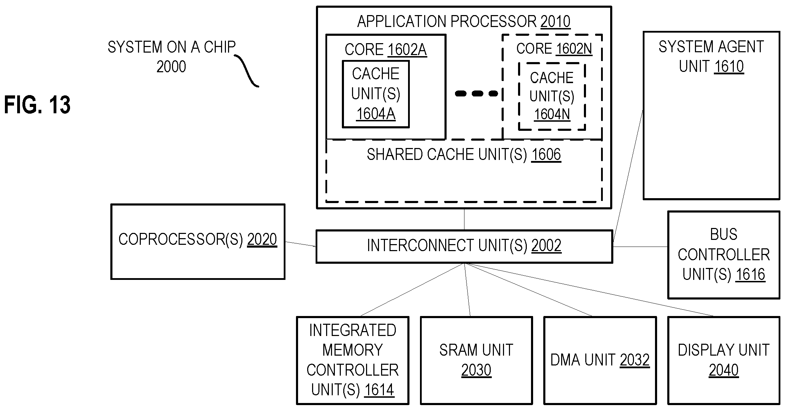

Various embodiments may include any or all of the aspects illustrated in **Figure 1A****,** some with additional aspects. For example, aspects of core 112 may be implemented in core 1490 in embodiments as shown in **Figure 7B****,** a core in embodiments as shown in **Figure 8A/8B****,** cores 1602A/1602N in embodiments as shown in **Figure 9****,** processors 1710/1715 in embodiments as shown in **Figure 10****,** processors 1870/1880 in embodiments as shown in **Figures 11** **and** **12****,** and/or application processor 2010 in embodiments as shown in **Figure 13****.**

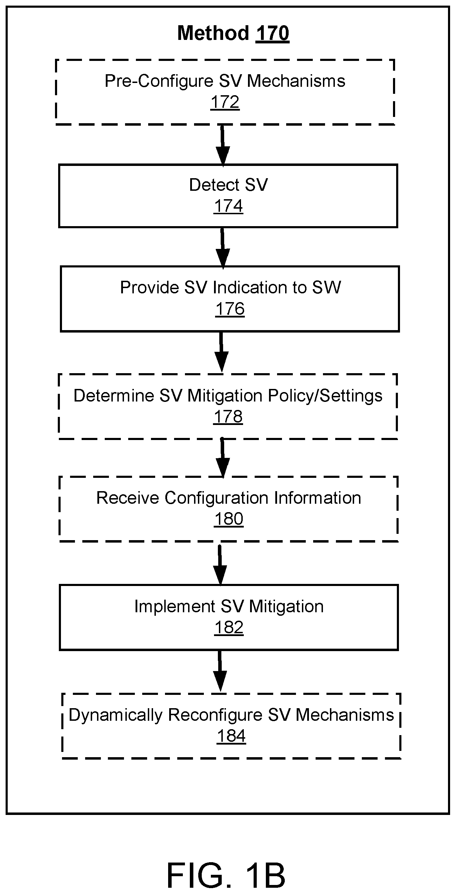

**Figure 1B** illustrates a method 170 according to embodiments. In 172, one or more default mitigation switches in SV mitigation HW 130 are set (e.g., based on defaults configured in SV detection HW 150 by design, a basic input-output system (BIOS), etc.). In 174, vulnerability to a speculative execution attack is detected (e.g., by SV detection HW 150). In 176, an indication of speculative execution attack vulnerability, which may include SV detection information, such as a prediction of an attack, a category of an attack, and/or a confidence level of an attack, is provided by SV detection HW 150 to system SW 140. In 178, determining, by system SW 140 based on the SV detection indication/information from SV detection HW 150, a mitigation switch policy and/or settings to apply to SV mitigation HW 130.

In 180, the hardware 110 receives configuration information, as determined by system SW 140, which may be, include, and or be based on the policy and/or settings determined by system SW 140 in 178. In 182, SV mitigation may be implemented by using the configuration information directly to reconfigure SV mitigation HW 130 and/or indirectly, through an interface (e.g., implemented in SV detection HW 150) such as weights vector 156, which may represent any one or more vectors or other datatypes corresponding to any one or more SV mitigation mechanisms or switches, each with any number of settings to provide a range of mitigation levels.

In embodiments, the configuration information may include one or more weights vectors 156 provided by software (e.g., by programming an SV mitigation weights register). In 184, SV mitigation HW 130 may be dynamically reconfigured (e.g., by flipping one or more SV mitigation switches) based on weights vector 156 to provide dynamically varying levels of SV mitigation (e.g., in response to signals from SV detection HW 150).

In embodiments, configuring and/or setting switches in SV mitigation HW 130, directly or indirectly, may be performed by system SW 140 using novel instructions, as further described below.

Thus, a potential attack may be detected and mitigated against dynamically based on the category of attack, the predicted probability of the attack, the level of security needed/desired by application SW 160 and/or its user, the level of performance needed/desired by application SW 160 and/or its user, etc.

In embodiments, one or more instructions added to an ISA or in an extension to an ISA may provide for software (e.g., SW 120) to indicate to hardware (e.g., HW 110) which microarchitectural structures to harden against SVs and under what conditions. In embodiments, such instructions may indicate that any one or more microarchitectural changes may be allowed or not allowed to proceed during speculative execution, including but not limited to: updates to the data cache hierarchy, reads from the data cache hierarchy (including updates to metadata and/or replacement states), updates to the instruction cache and prefetch buffers, changes to metadata and/or replacement states of the instruction cache and prefetch buffers, changes to memory ordering structures (load buffer, store address buffer, store data buffer, etc.), changes to branch predictor state, changes to register state (physical register file, register alias table, etc.), changes to all front-end structures, changes to all back-end structures, changes to all execution resources. In embodiments, each such indication may be used to indicate that the hardware should enforce the hardening (e.g., a hint) or that the hardware must enforce the hardening (e.g., a requirement).

In embodiments, different instructions, different encodings of mode bits within or associated with instructions, different segment selectors associated with instructions, different values in registers associated with instructions, different prefixes or suffixes associated with instructions, etc. may be used to differentiate between which microarchitectural structures to harden (or relax/loosen hardening of) and/or which microarchitectural changes to prevent (or allow) for various instances of speculative execution. An instruction used in this way according to embodiments may be referred to as an SV harden, SV hardening, or SV mitigation instruction.

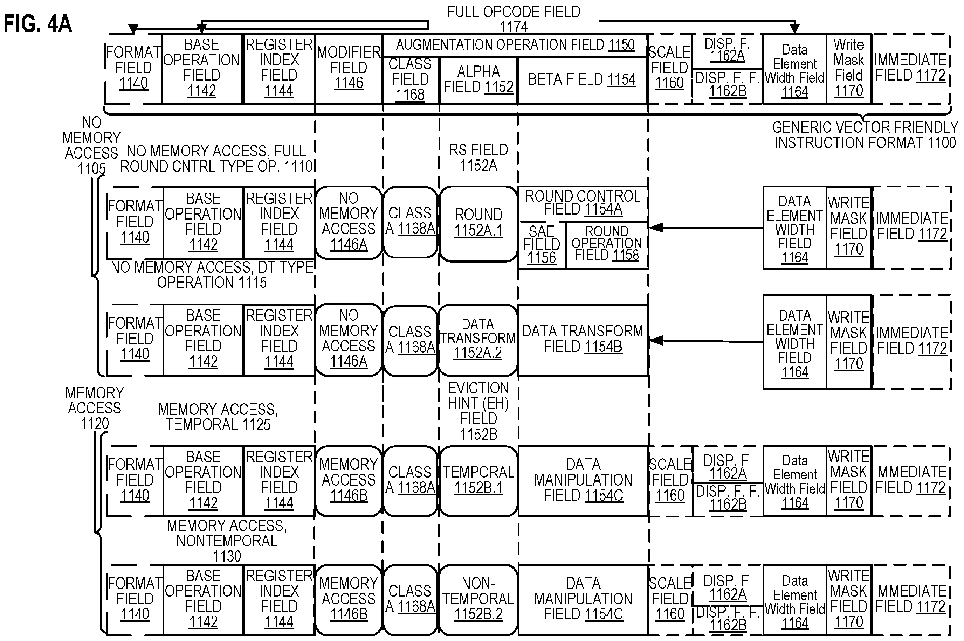

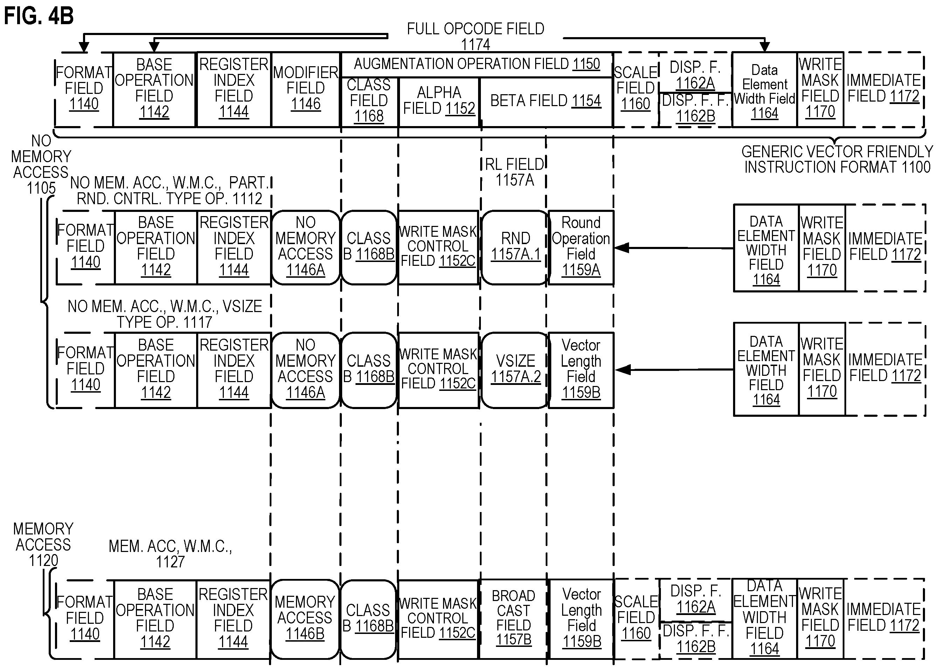

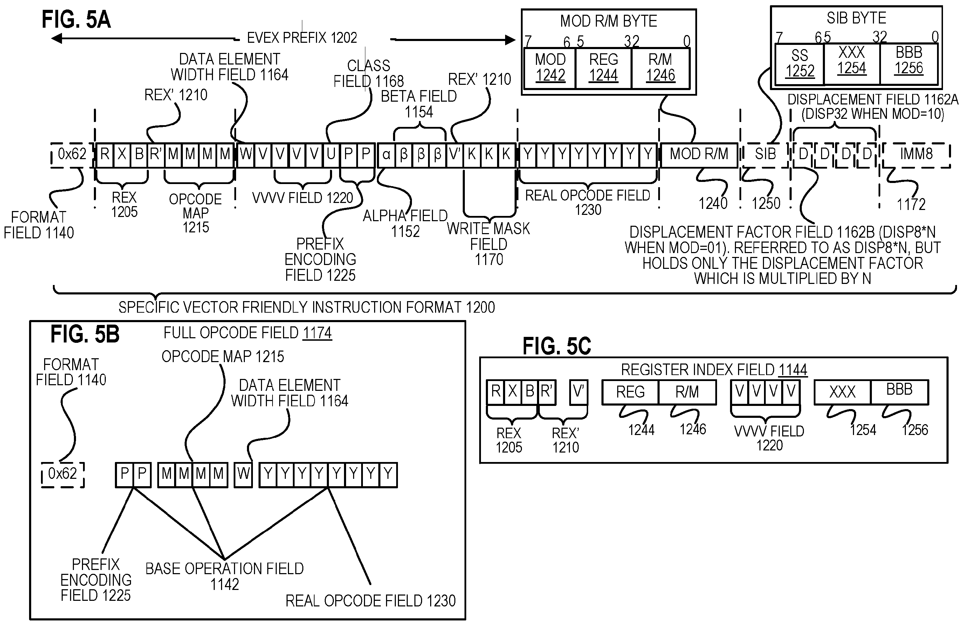

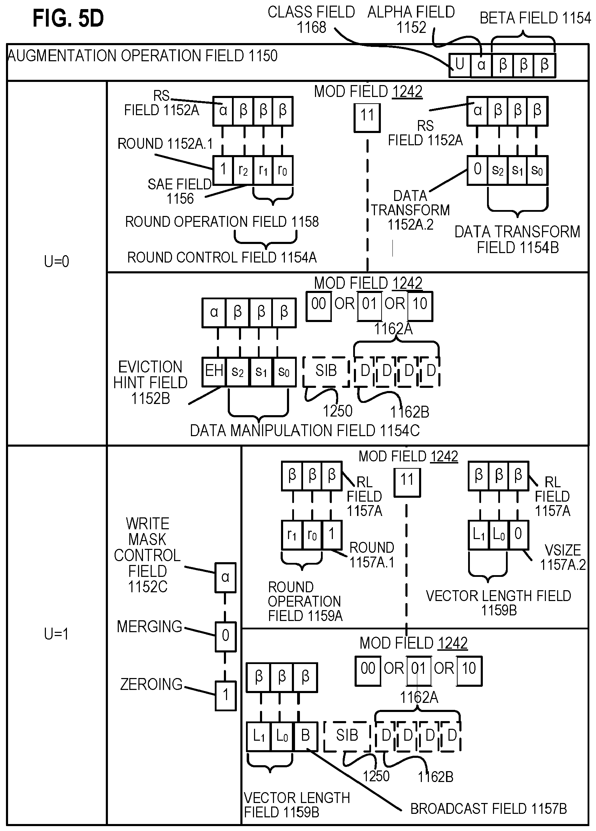

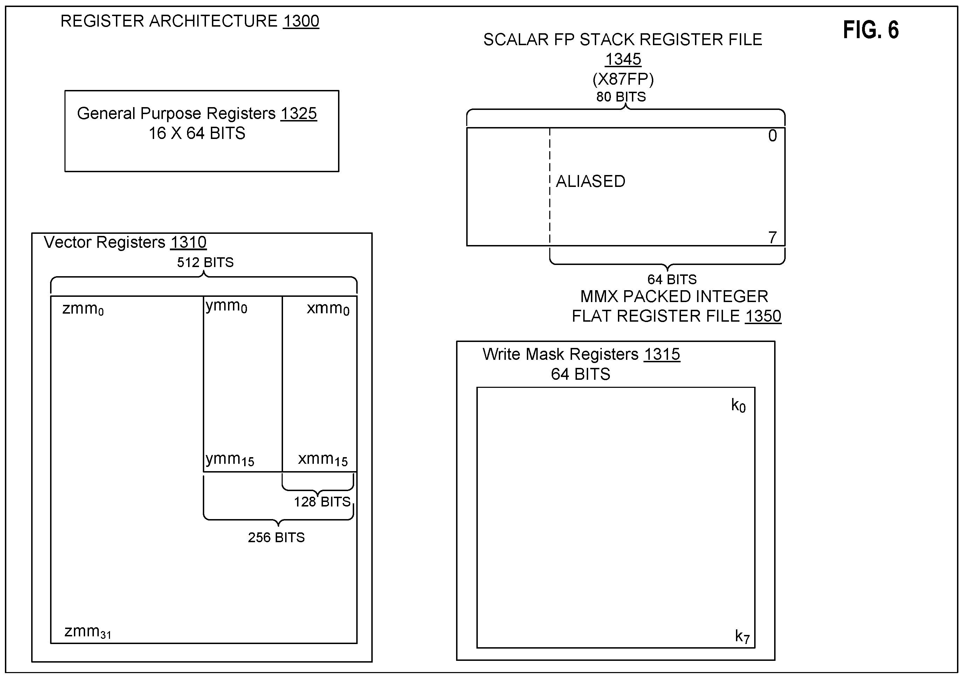

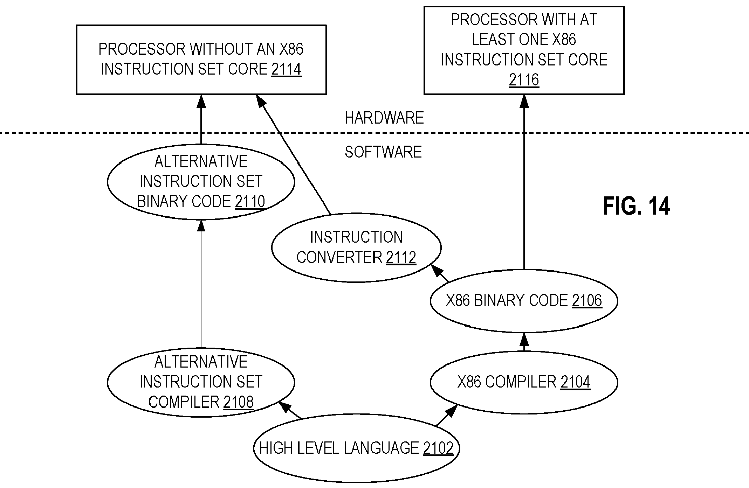

In various embodiments, SV harden/mitigation instructions may have various formats; be included in an instruction set architecture corresponding to various register architectures; and/or be decoded, translated, converted, etc., according to a variety of approaches. For example, **Figures 4A****,** **4B****,** **5A, 5B, 5C****, and** **5D** illustrate embodiments of a format that may be used for an SV harden/mitigation instruction; **Figure 6** illustrates embodiments of a register architecture corresponding to an instruction set architecture including one or more SV harden/mitigation instructions; and **Figure 14** illustrates embodiments for conversion/translation of harden/mitigation instructions.

In embodiments, instructions following the SV harden instruction may be executed with the microarchitecture configured as specified by the SV harden instruction, until, for example, a subsequent SV harden instruction is received, decoded, and/or executed, or until, for example, a speculation frontier is reached (where a speculation frontier may be defined as a dynamic boundary between instructions that are being executed speculatively (e.g., might be on a wrong path) and instructions that are being executed non-speculatively (e.g., known to be on the correct path)).

In embodiments, software may fine tune SV mitigation to enable SV mitigation at lower performance cost. In embodiments, program analysis, compiler technology, etc. may be used to determine or suggest which hardware structures should or need to be hardened under which conditions.

In embodiments, a mode bit field may be included in the format of or otherwise associated with an SV harden instruction to indicate which microarchitectural structures to harden (or remove/relax hardening of) and/or which microarchitectural changes to prevent (or allow) for various instances of speculative execution.

In embodiments, mode bits in the mode bit field may specify multiple microarchitectural structures (coarse-grained mode bits). For example, in a mode bit field, a first bit position may correspond to all (or a designated subset of all) front-end structures, a second bit position may correspond to all (or a designated subset of all) back-end structures, a third bit position may correspond to all (or a designated subset of all) memory structures, a fourth bit position may correspond all (or a designated subset of all) branch-prediction-related structures, a fifth bit position may correspond to all (or a designated subset of all) execution structures, etc.

In embodiments, mode bits in the mode bit field may specify particular changes to microarchitectural structures (fine-grained mode bits). For example, different bit positions may correspond to data cache updates, data cache metadata/replacement updates, data cache reads, instruction cache updates, prefetch buffer updates, instruction cache metadata/replacement updates, decoded instruction buffer updates, prefetcher updates (may be separate bits per prefetcher), branch history updates, branch target buffer updates, load buffer updates, store address buffer updates, store data buffer updates, physical register file updates, register alias table updates, instruction translation lookaside buffer (TLB) updates, instruction TLB metadata/replacement updates, data TLB updates, data TLB metadata/replacement updates, secondary TLB updates, secondary TLB metadata/replacement updates, etc.

Embodiments may include any combination of coarse-grained and/or fine-grained mode bits associated with any one or more SV harden instruction. Embodiments may include a hardening mode register having any number of bit positions to store information from the mode bit field of an SV harden instruction, for example, one hardening mode register bit per bit of the mode bit field. A mode bit field and/or a hardening mode register may also include any number of bits to represent groups of any other bits, for example, a single global bit that may be used to enable or disable all hardening mechanisms or all hardening mechanisms for which an individual hardening bit is set (or clear).

In embodiments, setting protections may include hardening (or removing/relaxing hardening of) any one or more microarchitectural structures and/or preventing (or allowing) any number of changes to microarchitectural state, based on values in a mode bit field of one or more SV harden instructions and/or one or more hardening mode registers, examples of which are described below. Removing and/or relaxing the application of hardening mechanisms and/or allowing previously blocked/prevented changes (e.g., specific changes, types of changes, etc.), whether by hardware and/or or by software (e.g., using an SV harden instruction), may also be referred to as lifting restrictions.

In embodiments, an SV harden instruction may be a prefix instruction (e.g., a new instruction or a prefix to an existing instruction) to set (or relax) protections for following instructions and/or the instruction(s) to which the prefix is added. For example:

```
        HARDEN_PREFIX <MODE_BITS>
```

In embodiments, an SV harden instruction may be used as one of a pair of instructions to set and reset protections for instructions between the pair of instructions. For example:

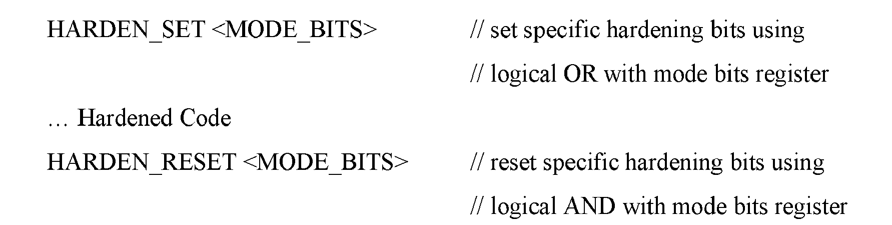

In embodiments, a pair of instructions may have opposite syntax to set protections and then reset the protections to the values in place before the most recent corresponding instruction of the pair, thus providing for nested hardening levels. For example:

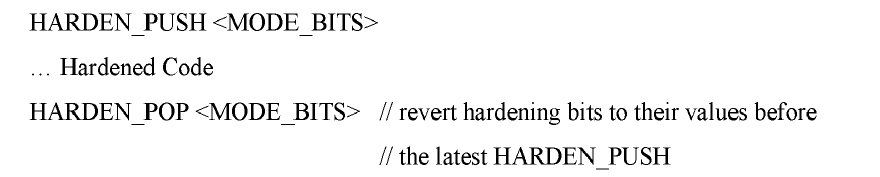

In embodiments, a pair of instructions may set some protections at the beginning of a code region and then reset all protections at the end of the code region. For example:

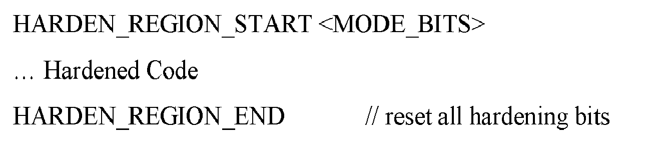

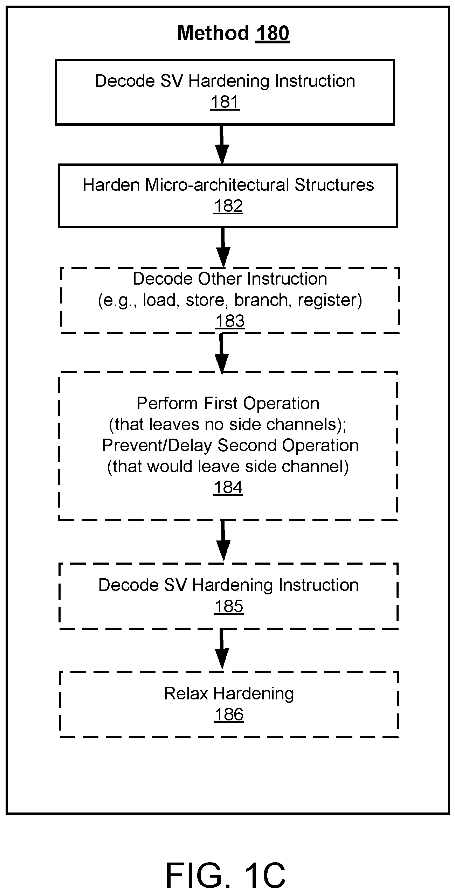

**Figure 1C** illustrates a method 180 of configuring SV mitigation mechanisms (e.g., execution circuitry 116) using one or more instructions (e.g., invoked by system SW 140 and/or received/decoded by instruction decoder 114) according to embodiments. In 181, a first invocation of a single instruction to mitigate vulnerability to a speculative execution attack is decoded. In 182, in response to the first invocation of the single instruction, one or more micro-architectural structures in the processor is hardened.

In 183, another instruction (e.g., a load instruction, store instruction, branch instruction, instruction to use content (e.g., data, flags, etc.) of a register, etc.) may decoded. The processor may be designed to execute the decoded instruction by performing one or more operations, which may include a first operation that does not leave a side channel (e.g., changes of the state of the microarchitecture that remain after the speculation window closes and are software observable (e.g., effects that can be measured via software methods) or other persistent observable side effects) and/or a second operation that, if performed (e.g., speculatively), would leave a side channel. The second operation may be included in the execution of the instruction to improve performance, in some cases only to improve performance.

In 184, in response to the other instruction, the first operation is performed and/or the second operation (because of the hardening applied in 182) is prevented. In some embodiments, the second operation may be delayed until it would no longer leave a side channel.

In 185, a second invocation of the single instruction may be decoded. In 186, in response to the second invocation of the single instruction, the hardening of the one or more micro-architectural structures may be relaxed.

The single instruction may indicate one or more conditions under which the one or more of the micro-architectural structures are to be hardened, one or more micro-architectural, and/or a hardening mode vector including a plurality of fields, each field corresponding to one of a plurality of hardening mechanisms. The hardening may include preventing changes to a cache, a buffer, or a register.

In various embodiments, the single instruction and/or an invocation of the single instruction (e.g., as may be indicated by leaves, operands, parameters, etc. of the single instruction) may be or correspond to a load hardening instruction, a store hardening instruction, a branch hardening instruction, or a register hardening instruction, each as described below.

In embodiments, mechanisms to harden microarchitecture against SVs may include any one or more or any combination of any known and/or novel (examples of which may be described below) hardening mechanisms, including but not limited to load hardening, store hardening, branch hardening, and register hardening. The terms "harden" and "hardening" may be used to refer to changing a microarchitectural structure in some way, for example to change it to prevent it from performing or allowing particular operations, some of which may be associated with instructions. Therefore, for convenience, the terms "harden" and "hardening" may also be used to refer to operations and instructions, to mean that these operations and instructions are impacted by the hardening of a micro-architectural structure.

In embodiments, load hardening may include determining, predicting, specifying, indicating, etc. which loads to harden, under what conditions loads are to be hardened (and/or hardening is to be removed/relaxed), what type/technique of load hardening is to be performed, etc. For example, loads may be hardened by not allowing speculative load instructions to execute and/or not allowing speculative load operations to proceed, by allowing speculative load instruction to execute and/or allowing speculative load operations to proceed but not allowing the loaded data to be forwarded, by allowing speculative load instructions to execute and/or speculative load operations to proceed but not allowing the loaded data to be forwarded to dependent instructions/operations, etc., until the load is known or presumed to be safe (e.g., known to be on the correct, no longer speculative, execution path).

In embodiments, hardware (e.g., SV detection HW 150 as described above) may determine or predict a type or category of attack, and software (e.g., system SW 140, as described above, using an SV hardening instruction as described above) may choose a type or category of load hardening based on the information from the hardware.

For example, hardware may predict a Spectre v1 attack, and, in response, software may choose one of the following load hardening mechanisms: do not allow loads to execute/proceed, allow loads to execute/proceed but do not allow them to leave a side channel based on the data returned, do not allow instructions dependent on the loaded data to leave a side channel (e.g., by not allocating cache lines or by not executing), etc. Conditions for removing/relaxing the load hardening, by hardware and/or as specified by software, may include any one of or combination of: when the load is no longer speculative due to older branches (conditional, indirect, implicit, etc.), at retirement of the load instruction, when specific older instructions/operations have completed execution or are retired (e.g., only block-listed/non-safe-listed branches or block-listed/non-safe-listed conditional branches), etc.

As another example, in response to hardware predicting a Spectre v2 attack, conditions for removing/relaxing the load hardening may include when indirect branches have completed execution or are retired.

As another example, in response to hardware predicting a Spectre v4 attack, software may choose a load hardening mechanism in which a load is prevented from bypassing an older unknown, incomplete, or unretired store.

As another example, a mechanism for transient load value hardening may include preventing a load from returning speculative data due to a speculative store bypass, memory renaming, and/or other value speculation schemes.

As another example, a mechanism for data oblivious load hardening may include preventing the latency of the load from depending on the value being returned.

In embodiments, store hardening may include determining, predicting, specifying, indicating, etc. which stores to harden, under what conditions stores are to be hardened (and/or hardening is to be removed/relaxed), what type/technique of store hardening is to be performed, etc. For example, stores may be hardened by not allowing speculative store instructions to execute and/or not allowing speculative store operations to proceed until the store is known or presumed to be safe (e.g., known to be on the correct, no longer speculative, execution path).

In embodiments, hardware (e.g., SV detection HW 150 as described above) may determine or predict a type or category of attack, and software (e.g., system SW 140, as described above, using an SV hardening instruction as described above) may choose a type or category of store hardening based on the information from the hardware.

For example, hardware may predict a Spectre v1 attack, and, in response, software may choose one of the following store hardening mechanisms: do not allow stores to execute, allow stores to execute but do not allow them to leave a side channel based on the data stored, do not allow instructions dependent on data from store-to-load forwarding to leave a side channel (e.g., by not allocating cache lines or by not executing), etc. Conditions for removing/relaxing the store hardening, by hardware and/or as specified by software, may include any one of or combination of: when the store is no longer speculative due to older branches (conditional, indirect, implicit, etc.), at retirement of the store instruction, when specific older operations have completed execution (e.g., only block-listed/non-safe-listed branches or block-listed/non-safe-listed conditional branches), etc.

As another example, in response to hardware predicting a Spectre v4 attack, software may choose a store hardening mechanism in which younger loads are prevented from bypassing a store.

As another example, a mechanism for data oblivious store hardening may include preventing the latency of the store from depending on the value being stored.

In embodiments, branch hardening may include determining, predicting, specifying, indicating, etc. which branches to harden, under what conditions branches are to be hardened (and/or hardening is to be removed/relaxed), what type/technique of branch hardening is to be performed, etc. For example, branches may be hardened by not allowing speculative branch instructions to execute and/or not allowing speculative branch operations to proceed, not allowing branch prediction (e.g., instead, stall, mispredict to a known safe location, etc.), harden loads (e.g., as described above) in the shadow of the branch, delaying branch prediction until retirement, checking for a branch termination instruction (e.g., ENDBRANCH), etc., until the branch is known or presumed to be safe (e.g., known to be on the correct, no longer speculative, execution path).

In embodiments, hardware (e.g., SV detection HW 150 as described above) may determine or predict a type or category of attack, and software (e.g., system SW 140, as described above, using an SV hardening instruction as described above) may choose a type or category of branch and/or load hardening based on the information from the hardware.

For example, hardware may predict a Spectre v1 or v2 attack, and, in response, software may choose a load hardening mechanism (e.g., as described above) for all loads in the shadow of the branch and/or not lifting restrictions set by harden operations younger than the branch or branch condition until the branch is determined to be safe/correct.

In embodiments, register hardening may include determining, predicting, specifying, indicating, etc. which registers to harden, under what conditions registers are to be hardened (and/or hardening is to be removed/relaxed), what type/technique of register hardening is to be performed, etc. In embodiments, the hardening may be applied to the output register and/or the flags of an instruction.

For example, registers may be hardened by fencing a register, not allowing speculative instructions that load a register to execute and/or not allowing speculative operations that load a register to proceed, not allowing speculative instructions that use the content of a register to execute and/or not allowing speculative operations that use the content of a register to proceed, not performing or allowing data forwarding from a register to data dependent operations, not allowing instructions dependent on the register or flags to leave a side channel (e.g., by not allocating cache lines or not executing, etc., until the content of the register is known or presumed to be safe (e.g., known to be based on the correct, no longer speculative, execution path)). Conditions for removing/relaxing the register hardening, by hardware and/or as specified by software, may include any one of or combination of: when the corresponding register instruction is no longer speculative due to older branches (conditional, indirect, implicit, etc.) or some other hardware predictor, at retirement of the corresponding register instruction, when specific older instructions/operations have completed execution (e.g., only block-listed/non-safe-listed branches or block-listed/non-safe-listed conditional branches), a flag or condition specified by the corresponding register instructions evaluates to true (the fence operation may modify the content of the register if a flag and condition are specified and evaluate to false). etc.

In embodiments, hardware (e.g., SV detection HW 150 as described above) may determine or predict a type or category of attack, and software (e.g., system SW 140, as described above, using an SV hardening instruction as described above) may choose a type or category of register hardening based on the information from the hardware.

As an example, a mechanism for data oblivious register hardening may include preventing the latency of operations from depending on a value in a register.

Various embodiments may include other approaches to and/or techniques for SV mitigation, including, but not limited to the following (each as may be defined/described below): data tainting and tracking, segmentation-based protections, access distancing, and hybrid-key-based web browsing.

In embodiments, data tainting and tracking may include the capability for software (e.g., system SW 140), using one or more instructions, mode bits within or associated with one or more instructions, segment selectors associated with one or more instructions, values in registers associated with one or more instructions, prefixes or suffixes associated with one or more instructions, etc. to mark data that might be (e.g., based on information from SV detection HW 150) controlled by an attacker. Such marking may be referred to as tainting and/or such data may be referred to as tainted (and data not so marked may be referred to as untainted).

In embodiments, tainted data may be tracked by hardware. For example, the data itself may be marked by including in it one or more extra bits to mark it as tainted. As another example, a record or list may be kept or maintained to indicate registers, memory locations, or other storage locations (e.g., by address or otherwise) into which tainted data has been loaded or stored.

In embodiments, operations using tainted data may be prevented from being performed speculatively, operations using tainted data may be allowed to be performed non-speculatively, and/or operations using untainted data may be allowed to be performed speculatively and non-speculatively. For example, a speculative load from a memory address may be allowed to proceed if the address is a tainted address (i.e., marked as tainted data) but prevented from proceeding if the address is a tainted address (i.e., marked as tainted data).

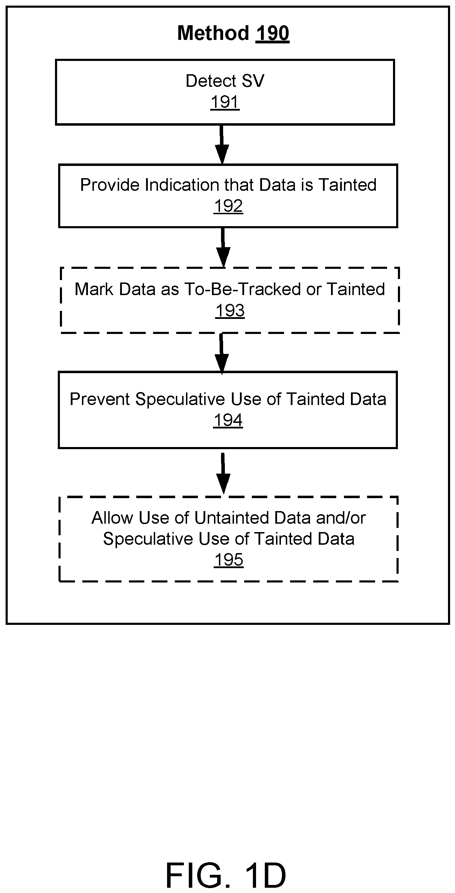

**Figure 1D** illustrates a method 190 of data tainting for SV mitigation according to embodiments. In 191, vulnerability to a speculative execution attack is detected (e.g., by SV detection HW 150). In 192, in connection with detection of vulnerability to a speculative execution attack, an indication that data from a first operation is tainted is provided (e.g., by SV detection HW 150 to system SW 140). In 193, the data is marked as to be tracked (e.g., marked by SV detection HW 150 for tracking by HW 110) and/or as tainted (e.g., in response to decoding an instruction from system SW 140). In 194, performance of a second operation using the data if the second operation is to be performed speculatively and the data is tainted is prevented (e.g., by SV mitigation HW 130). In 195, the second operation is performed if or when performance is or becomes non-speculative or the data is or becomes untainted.

In embodiments, segmentation-based protections may include a novel programming language construct that provide for particular regions of code to access particular segments (or ranges, regions, etc.) of memory with protection from SVs. In embodiments, the protected segments may be used to store data structures, their fields, program variables, etc. for particular programs. In embodiments, the programming language construct may also allow for specifying access permissions.

In embodiments, the programming language construct may be compiled to use instructions to access the memory in the segment with protection check in place. These instructions may be novel instructions and/or instructions (e.g., that read, write, or modify the memory segment) with or associated with mode bits, segment selectors, values in registers, prefixes or suffixes, etc. to specify the protections and/or access permissions. In embodiments, these instructions may be instructions that are executed with the specified access checking performed automatically.

In embodiments, the programming language construct and novel instructions may be supported by hardware that executes the code while protecting the segment from intrusion including speculative side channel attacks (e.g., using any known or novel (as may be described in this specification) SV mitigation techniques). In embodiments, implementation of the hardware may provide for the instructions to be performed without explicit loads and checks of the segment bounds.

For example, the programming language construct may be of the form (where "GiveAccess" represents a name/label/mnemonic of/for the instruction/construct, "Base=CodeBegin" is to indicate/specify the start of the code, "CodeLen" is to indicate/specify the length/range of the code, "MemBegin" is to indicate/specify the start (e.g., an address) of the corresponding memory segment, "MemLen" is to indicate/specify the length of the corresponding memory segment, and "AccessType" is to indicate/specify the permissions):

```
        GiveAccess Base=CodeBegin, CodeLen, MemBegin, MemLen, AccessType
```

In embodiments, the specified code region may include a table having a number of different buffers that it may access. The buffers may be embedded in the table, for example (where "Num of buffs" corresponds to the number of buffers including a first buffer starting at "Start_1" and having a length/range indicated/specified by "Len_1" and permissions indicated/specified by "AccessType1" and so on):

```
        Num of buffs
        Start_1, Len_1, AccessType_1
        Start_2, Len_2, AccessType_2
        Start_n, Len_n, AccessType_n
```

In embodiments, the code within the specified region may access the memory buffers with an index to the table and an index within the corresponding buffer.

In embodiments, just-in-time (JIT) compilers may dynamically check for availability of the construct and generate code accordingly, and static compilers may generate a version of code that uses the construct and another version that does not.

In embodiments, access distancing may include refactoring software programs, applications, libraries, modules, components, functions, procedures, blocks, and/or other form of software and/or program code, etc. (where the term "code" may be used to mean software in any such form) to limit the impact of intrusion by reducing the attack surface. Embodiments may provide for the safety of code to be increased by reducing and/or redirecting one or more interactions and communications by a component (where the term "component" may be used to mean the code or any portion or subset of the code) and/or between/among components so that fewer components are exposed to a vulnerable or faulty component. Embodiments may include automated creation of an access graph of code and automated refactoring to a more restrictive access topology. Embodiments may use hardware- or software-based telemetry to guide the refactoring.

In embodiments, telemetry data may be collected when code is executed to provide a memory access topology diagram of the code, revealing the interactions and communications between different modules and what data is touched by different execution paths. In embodiments, such information and/or related information may also or instead be gathered by profiling the code when it is compiled.

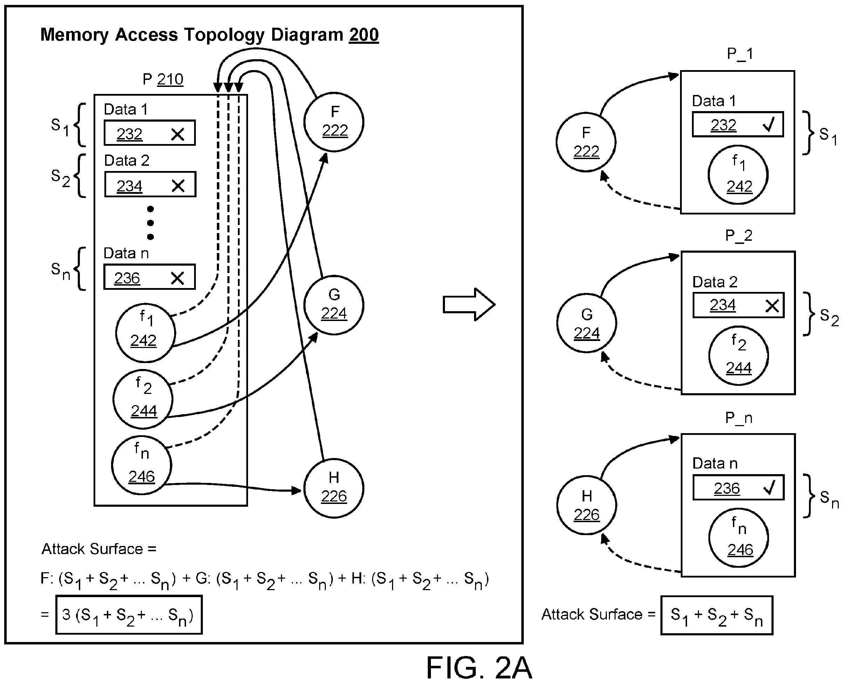

In embodiments, a software development advisor tool may use the memory access topology diagram to reduce the attack surface by refactoring the code. **Figure 2A** illustrates a simple example.

In **Figure 2A****,** a memory access topology diagram 200 created according to an embodiment may reveal that a module P (210) is used by three functions: F (222), G (224), and H (226). Module P has three data structures: S1 (232), S2 (234), and Sn (236), that are accessed by its code. For providing service to the calls from F, G, and H, the functions f1 (242), f2 (244), and fn (246) are executed correspondingly. As is, all the mentioned data structures can be accessed and modified by each one of functions f1, f2, fn. However, in reality, only S1 might be needed for f1, S2 for f2, and Sn for fn. If the code of f2 can be attacked, as is, that can impact S1, S2, and Sn. However, a software development advisor tool according to an embodiment may analyze the access patterns, realize this fact, and transform the code on the left side to the code on the right side. Thus, in this example, an embodiment reduces the attack surface of the code from a size of 3*(S1+S2+Sn) to a size of S1+S2+Sn, which is one third of that of the original code.

In the example of **Figure 2A****,** a full isolation of the functions is performed by closing and specializing the module P for its three different callers (F, G, H), which might not always possible for other code. However, in embodiments, similar transformations may group different parts of code, including modules and functions, to reduce the attack surface.

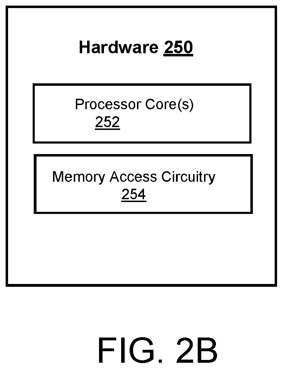

Hardware 250 for access distancing, as shown in **Figure 2B****,** according to embodiments, may include one or more processor cores 252 to execute code, and memory access circuitry 254 to access a memory in connection with execution of the code. One or more of the one or more processor cores 252 is also to generate a memory access topology diagram of the code to determine a first attackable surface of the code (e.g., as described above); and refactor the code based on the memory access topology diagram to generate refactored code, the refactored code to have a second attackable surface smaller than the first attackable surface (e.g., as described above).

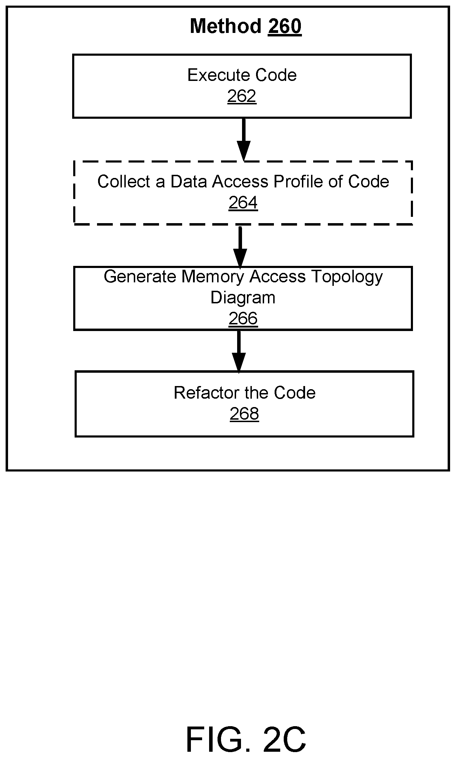

A method 260 of access distancing according to embodiments is shown in **Figure 2C****.** In 262, code is executed.

In 264, a data access profile of the code is collected (e.g., as described above). Collecting the data access profile may be performed statically or dynamically, by executing the code in its use scenarios (e.g., using telemetry hardware). In various embodiments, collecting the data access profile, may be performed/implanted by/in hardware, firmware, software, and/or any combination of hardware, firmware, and software.

In 266, a memory access topology diagram is generated (e.g., as described above) based on the data access profile. In various embodiments, generating the memory access topology diagram, may be performed/implanted by/in hardware, firmware, software, and/or any combination of hardware, firmware, and software.

In 268, the code is refactored (e.g., as described above). Refactoring the code may be performed by a software development advisor tool that uses the profile information and the code to create a model for calculating the attack surface, then transforming the code to reduce the attack surface based on the model. In embodiments, the transforming may include cloning and/or specialization of procedures to provide for reducing interactions and communications. In embodiments, the method may be iterative, and the advisor tool may learn from new telemetry data from transformed code. In various embodiments, refactoring, including the advisor tool, may be performed/implanted by/in hardware, firmware, software, and/or any combination of hardware, firmware, and software.

In embodiments, refactoring may be performed statically or dynamically. For example, a JIT or managed runtime could dynamically profile code and then specialize it on the fly to perform fine-grained compartmentalization. An optimizing JIT may have a series of "gears," wherein they shift to higher, more aggressively optimized specialization of a function in response to learning that the function has a high (e.g., at or above a fixed or variable threshold) frequency of use and/or many (e.g., at or above a fixed or variable threshold) interactions/communications. Permissions of a function may be locked down (e.g., by or based on information from a profiler) after sufficient (e.g., at or above a fixed or variable threshold) knowledge regarding its use, boundaries, interactions, communication, etc. has been collected and/or analyzed.

In embodiments, the security of and/or the efficiency of securing web browsing, website usage, web application usage, etc. may be increased and SV may be mitigated by protecting memory with hybrid keys based on public keys and process identifiers (IDs). For example, embodiments may be used to protect data, executable content, and code generation such as JIT code/bytecode and its generation, compiled/pre-generated code/bytecode and its generation, web application (e.g., progressive web application or PWA) content, etc.

Usages of embodiments may be desired because they may be more compatible with existing approaches to web security (e.g., public key private key encryption) and more efficient than existing approaches to web security (e.g., process isolation). For example, embodiments may provide for public-key-based web applications to use a combined memory security policy that allows groupings of processes (e.g., based on groups of webpages) to use shared memory, instead of isolating all processes (e.g., each individual webpage) from each other.

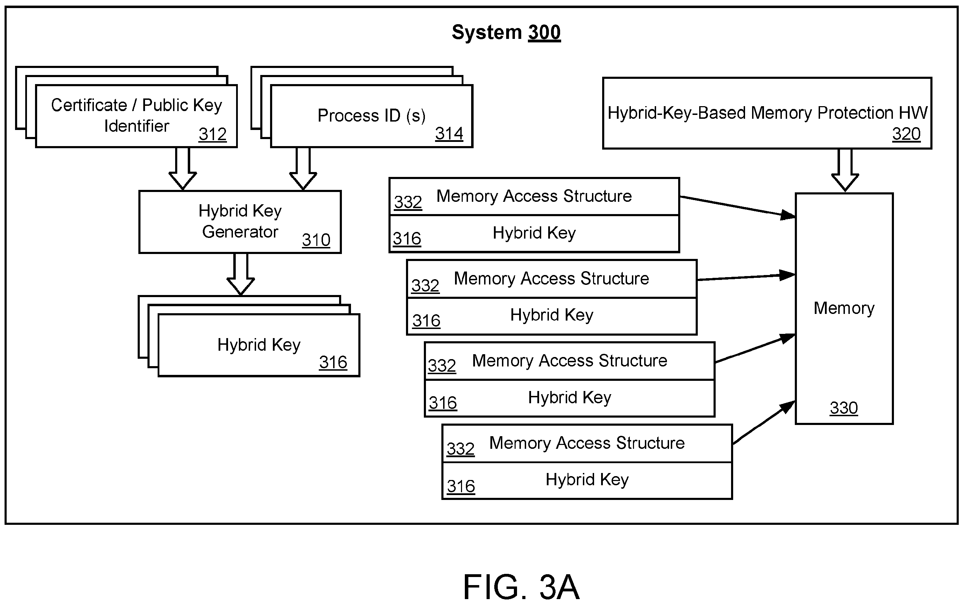

Aspects of some embodiments are illustrated in **Figure 3A. Figure 3A** shows system 300 including and/or capable of receiving a number of public keys 312 and a number of process IDs 314. Each public key 312 may be obtained, for example, from a corresponding website and/or website certificate and/or be used for site isolation and secure internet communication. Each process ID 314 may correspond to (e.g., be generated to identify) a process, such as a website or browser process, where a "process" may include a process, a task, a software thread, an application, a virtual machine, a container, etc.

Any combination of one or more public keys 312 and one or more process IDs 314 may be used by hybrid key generator 310 to generate one or more hybrid keys 316. For example, a first public key from a first website and a first and a second process ID may be used to generate a first hybrid key, a second public key from a second website and a third and a fourth process ID may be used to generate a second hybrid key, and so on.

In embodiments, hybrid key generator 31o may include hardware such as circuitry to generate and/or combine cryptographic keys, such as but not limited to one or more shift registers (e.g., linear feedback shift registers), modular exponentiation circuitry, elliptical curve cryptography circuitry, arithmetic operation circuitry, logic operation circuitry, etc. In embodiments, hybrid key generator 310 may use inputs in addition to public keys and process IDs to generate keys. These inputs may include random numbers, pseudo-random numbers, and/or private keys of system 300 and/or a processor/core in system 300 (e.g., generated by a random number generator, generated by a physical unclonable function, stored in fuses, etc.).

Each such hybrid key 316 may be used by hybrid-key-based memory protection hardware 320 to protect memory 330. For example, memory protection hardware 320 may protect one or more memory spaces using a single hybrid key 316. Each memory space may include and/or correspond to one or more memory ranges, regions, or portions of memory 330 (e.g., defined by address ranges where the address may be physical addresses, virtual addresses, host addresses, guest addresses, etc.). Memory protection hardware 320 may use a single hybrid key 316 to protect memory spaces according to any memory protection technique, such as using the single hybrid key 316 to encrypt and decrypt data as it is stored in and loaded from memory 330, using the single hybrid key 316 to control access to memory 330 based on range registers, etc. Furthermore, hybrid-key-based memory protection hardware 320 may use multiple hybrid keys 316, each to protect one or more corresponding spaces, ranges, or regions of memory 330.

In embodiments, memory 330 may represent system memory (e.g., dynamic random-access memory), local (e.g., static random-access memory on the same substrate, chip, or die, or within the same package as a processor or processor core executing processes using the memory), or a combination of system and local memory. Memory 330 may store/cache content, data, code, etc. from/for any number of processes (e.g., website processes, browser processes, etc.). In embodiments, access to spaces in memory 330 may be provided and/or controlled through a memory access structure 332, which may include hardware, circuitry, and/or storage to generate, store, and/or reference one or more memory pointers, memory addresses, memory address ranges, memory address translation/page/paging tables or structures, which may prevent, restrict, limit, and/or otherwise control access based on (e.g., access may require) a corresponding hybrid key 316. For example, access to each web/browser process's content, data, code, etc. in memory 330 through a heap memory pointer structure may require a corresponding hybrid key 316.

In embodiments, memory access structure 332 may represent a single structure to control access to a single memory space, a single structure to control access to multiple spaces, multiple structures wherein each structure is to control access to a corresponding one of multiple spaces, a distributed structure including multiple single structures (e.g., one per memory space to provide/perform generation, storage, referencing, etc. unique to each memory space associated with a particular hybrid key 316) and a shared structure (e.g., to provide/perform generation, storage, referencing, etc. common to all of memory spaces associated with the particular hybrid key 316), etc.

In embodiments, any number of processes may share a hybrid key (e.g., generated based on a single public key and any number of process IDs) and therefore share memory space(s) in memory 330. Furthermore, memory 330 may also be used to store memory spaces protected with processes IDs for individual processes (including those based on websites/browsing and those not based on websites/browsing) according to any known approach.

In embodiments, pre-compiled binaries used in JIT code such as built-ins as well as JIT code compiled at runtime by a virtual machine (VM) that is converted to a bytecode (e.g., abstract syntax tree (AST) bytecode and content used in web applications (e.g., JavaScript text code, WebAssembly bytecode, Cascade Style Sheets (CSS)) and binary images (e.g., an executable file) may be associated with a hybrid key. Embodiments may provide for grouping rights of applications, functional processes, and content providers and allow grouped processes to share memory.

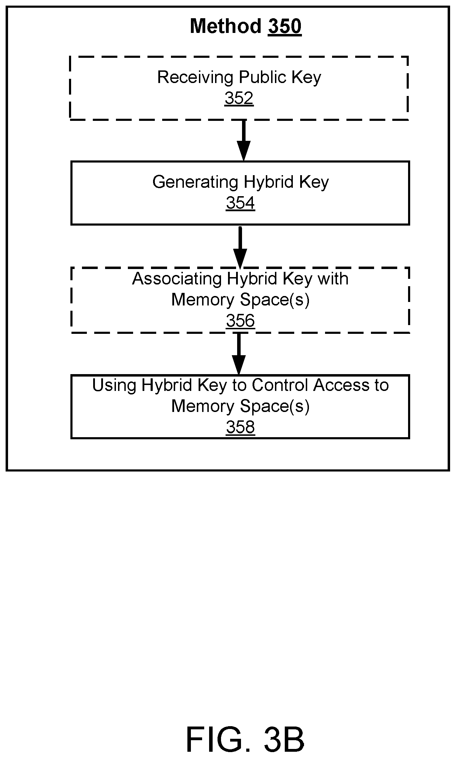

**Figure 3B** illustrates method 350 of protecting memory using hybrid keys according to embodiments. In 352, a public key may be received from a website. In 354, a hybrid key based on a first public key and one or more process identifiers is generated (e.g., by hybrid key generator 310). Each of the process identifiers may correspond to one or more memory spaces in a memory.

In 356, the hybrid key is associated (e.g., by memory protection hardware 320) with each of multiple memory access structures. Each of the memory access structures to control access to a corresponding one of the memory spaces.

In 358, the hybrid key is used (e.g., by memory protection hardware 320 and/or memory access structure(s) 332 to control access to one or more of the memory spaces. For example, the hybrid key may be used to allow access a first group of web browser processes to access a first group of memory spaces and prevent access by a process that is not in the group.

### ADDITIONAL DESCRIPTION

Described below are mechanisms, including instruction sets, to support systems, processors, emulation, etc. according to embodiments. For example, what is described below details aspects of instruction formats and instruction execution including various pipeline stages such as fetch, decode, schedule, execute, retire, etc. that may be used in a core according to embodiments.

Different figures may show corresponding aspects of embodiments. For example, any and/or all of the blocks in **Figure 1A** may correspond to blocks in other figures. Furthermore, a block representing hardware in **Figure 1A** may correspond to a block representing hardware in any of the other figures, such as in a block diagram of a system according to an embodiment. As such, an embodiment represented by that system-level block diagram may include any of the blocks shown in other figures as well as any of the details in the descriptions of those other figures. The same is true for figures depicting a core, a multicore processor, a system on a chip (SoC), etc.

### INSTRUCTION SETS

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream may have specific contents in the operand fields that select specific operands. A set of single instruction multiple data (SIMD) extensions referred to as the Advanced Vector Extensions (AVX) (AVX1 and AVX2) and using the Vector Extensions (VEX) coding scheme has been released and/or published (e.g., see Intel® 64 and IA-32 Architectures Software Developer's Manual, September 2014; and see Intel® Advanced Vector Extensions Programming Reference, October 2014).

### EXEMPLARY INSTRUCTION FORMATS

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

### Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations with the vector friendly instruction format.

**Figures 4A-4B** are block diagrams illustrating a generic vector friendly instruction format and instruction templates thereof according to embodiments. **Figure 4A** is a block diagram illustrating a generic vector friendly instruction format and class A instruction templates thereof according to embodiments; while **Figure 4B** is a block diagram illustrating the generic vector friendly instruction format and class B instruction templates thereof according to embodiments. Specifically, a generic vector friendly instruction format 1100 is shown, for which are defined class A and class B instruction templates, both of which include no memory access 1105 instruction templates and memory access 1120 instruction templates. The term generic in the context of the vector friendly instruction format refers to the instruction format not being tied to any specific instruction set.

While embodiments will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 4A** include: 1) within the no memory access 1105 instruction templates there is shown a no memory access, full round control type operation 1110 instruction template and a no memory access, data transform type operation 1115 instruction template; and 2) within the memory access 1120 instruction templates there is shown a memory access, temporal 1125 instruction template and a memory access, non-temporal 1130 instruction template. The class B instruction templates in **Figure 4B** include: 1) within the no memory access 1105 instruction templates there is shown a no memory access, write mask control, partial round control type operation 1112 instruction template and a no memory access, write mask control, vsize type operation 1117 instruction template; and 2) within the memory access 1120 instruction templates there is shown a memory access, write mask control 1127 instruction template.

The generic vector friendly instruction format 1100 includes the following fields listed below in the order illustrated in **Figures 4A-4B****.**

Format field 1140 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 1142 - its content distinguishes different base operations.

Register index field 1144 - its content, directly or through address generation, specifies the locations of the source and destination operands, be they in registers or in memory. These include a sufficient number of bits to select N registers from a PxQ (e.g., 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 1146 - its content distinguishes occurrences of instructions in the generic vector instruction format that specify memory access from those that do not; that is, between no memory access 1105 instruction templates and memory access 1120 instruction templates. Memory access operations read from and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1150 - its content distinguishes which one of a variety of different operations to be performed in addition to the base operation. This field is context specific. In one embodiment, this field is divided into a class field 1168, an alpha field 1152, and a beta field 1154. The augmentation operation field 1150 allows common groups of operations to be performed in a single instruction rather than 2, 3, or 4 instructions.

Scale field 1160 - its content allows for the scaling of the index field's content for memory address generation (e.g., for address generation that uses 2^{scale} * index + base).

Displacement Field 1162A- its content is used as part of memory address generation (e.g., for address generation that uses 2^{scale} * index + base + displacement).

Displacement Factor Field 1162B (note that the juxtaposition of displacement field 1162A directly over displacement factor field 1162B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1174 (described later herein) and the data manipulation field 1154C. The displacement field 1162A and the displacement factor field 1162B are optional in the sense that they are not used for the no memory access 1105 instruction templates and/or different embodiments may implement only one or none of the two.

Data element width field 1164 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1170 - its content controls, on a per data element position basis, whether that data element position in the destination vector operand reflects the result of the base operation and augmentation operation. Class A instruction templates support merging-write-masking, while class B instruction templates support both merging- and zeroing-write-masking. When merging, vector masks allow any set of elements in the destination to be protected from updates during the execution of any operation (specified by the base operation and the augmentation operation); in one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1170 allows for partial vector operations, including loads, stores, arithmetic, logical, etc. While embodiments are described in which the write mask field's 1170 content selects one of a number of write mask registers that contains the write mask to be used (and thus the write mask field's 1170 content indirectly identifies that masking to be performed), alternative embodiments instead or additional allow the mask write field's 1170 content to directly specify the masking to be performed.

Immediate field 1172 - its content allows for the specification of an immediate. This field is optional in the sense that it is not present in an implementation of the generic vector friendly format that does not support immediate and it is not present in instructions that do not use an immediate.

Class field 1168 - its content distinguishes between different classes of instructions. With reference to **Figures 4A-B****,** the contents of this field select between class A and class B instructions. In **Figures 4A-B****,** rounded corner squares are used to indicate a specific value is present in a field (e.g., class A 1168A and class B 1168B for the class field 1168 respectively in **Figures 4A-B****).**

### INSTRUCTION TEMPLATES OF CLASS A

In the case of the non-memory access 1105 instruction templates of class A, the alpha field 1152 is interpreted as an RS field 1152A, whose content distinguishes which one of the different augmentation operation types are to be performed (e.g., round 1152A. 1 and data transform 1152A.2 are respectively specified for the no memory access, round type operation 1110 and the no memory access, data transform type operation 1115 instruction templates), while the beta field 1154 distinguishes which of the operations of the specified type is to be performed. In the no memory access 1105 instruction templates, the scale field 1160, the displacement field 1162A, and the displacement scale filed 1162B are not present.

### No-MEMORY ACCESS INSTRUCTION TEMPLATES - FULL ROUND CONTROL TYPE OPERATION

In the no memory access full round control type operation 1110 instruction template, the beta field 1154 is interpreted as a round control field 1154A, whose content(s) provide static rounding. While in the described embodiments the round control field 1154A includes a suppress all floating-point exceptions (SAE) field 1156 and a round operation control field 1158, alternative embodiments may support (e.g., may encode) both these concepts into the same field or only have one or the other of these concepts/fields (e.g., may have only the round operation control field 1158).

SAE field 1156 - its content distinguishes whether or not to disable the exception event reporting; when the SAE field's 1156 content indicates suppression is enabled, a given instruction does not report any kind of floating-point exception flag and does not raise any floating-point exception handler.

Round operation control field 1158 - its content distinguishes which one of a group of rounding operations to perform (e.g., Round-up, Round-down, Round-towards-zero and Round-to-nearest). Thus, the round operation control field 1158 allows for the changing of the rounding mode on a per instruction basis. In one embodiment where a processor includes a control register for specifying rounding modes, the round operation control field's 1158 content overrides that register value.

### No MEMORY ACCESS INSTRUCTION TEMPLATES - DATA TRANSFORM TYPE OPERATION

In the no memory access data transform type operation 1115 instruction template, the beta field 1154 is interpreted as a data transform field 1154B, whose content distinguishes which one of a number of data transforms is to be performed (e.g., no data transform, swizzle, broadcast).

In the case of a memory access 1120 instruction template of class A, the alpha field 1152 is interpreted as an eviction hint field 1152B, whose content distinguishes which one of the eviction hints is to be used (in **Figure 4A****,** temporal 1152B.1 and non-temporal 1152B.2 are respectively specified for the memory access, temporal 1125 instruction template and the memory access, non-temporal 1130 instruction template), while the beta field 1154 is interpreted as a data manipulation field 1154C, whose content distinguishes which one of a number of data manipulation operations (also known as primitives) is to be performed (e.g., no manipulation; broadcast; up conversion of a source; and down conversion of a destination). The memory access 1120 instruction templates include the scale field 1160, and optionally the displacement field 1162A or the displacement scale field 1162B.

Vector memory instructions perform vector loads from and vector stores to memory, with conversion support. As with regular vector instructions, vector memory instructions transfer data from/to memory in a data element-wise fashion, with the elements that are actually transferred dictated by the contents of the vector mask that is selected as the write mask.

### MEMORY ACCESS INSTRUCTION TEMPLATES - TEMPORAL

Temporal data is data likely to be reused soon enough to benefit from caching. This is, however, a hint, and different processors may implement it in different ways, including ignoring the hint entirely.

### MEMORY ACCESS INSTRUCTION TEMPLATES - NON-TEMPORAL

Non-temporal data is data unlikely to be reused soon enough to benefit from caching in the 1st-level cache and should be given priority for eviction. This is, however, a hint, and different processors may implement it in different ways, including ignoring the hint entirely.

### INSTRUCTION TEMPLATES OF CLASS B

In the case of the instruction templates of class B, the alpha field 1152 is interpreted as a write mask control (Z) field 1152C, whose content distinguishes whether the write masking controlled by the write mask field 1170 should be a merging or a zeroing.

In the case of the non-memory access 1105 instruction templates of class B, part of the beta field 1154 is interpreted as an RL field 1157A, whose content distinguishes which one of the different augmentation operation types are to be performed (e.g., round 1157A.1 and vector length (VSIZE) 1157A.2 are respectively specified for the no memory access, write mask control, partial round control type operation 1112 instruction template and the no memory access, write mask control, VSIZE type operation 1117 instruction template), while the rest of the beta field 1154 distinguishes which of the operations of the specified type is to be performed. In the no memory access 1105 instruction templates, the scale field 1160, the displacement field 1162A, and the displacement scale filed 1162B are not present.

In the no memory access, write mask control, partial round control type operation 1112 instruction template, the rest of the beta field 1154 is interpreted as a round operation field 1159A and exception event reporting is disabled (a given instruction does not report any kind of floating-point exception flag and does not raise any floating-point exception handler).

Round operation control field 1159A - just as round operation control field 1158, its content distinguishes which one of a group of rounding operations to perform (e.g., Round-up, Round-down, Round-towards-zero and Round-to-nearest). Thus, the round operation control field 1159A allows for the changing of the rounding mode on a per instruction basis. In one embodiment where a processor includes a control register for specifying rounding modes, the round operation control field's 1159A content overrides that register value.

In the no memory access, write mask control, VSIZE type operation 1117 instruction template, the rest of the beta field 1154 is interpreted as a vector length field 1159B, whose content distinguishes which one of a number of data vector lengths is to be performed on (e.g., 128, 256, or 512 byte).

In the case of a memory access 1120 instruction template of class B, part of the beta field 1154 is interpreted as a broadcast field 1157B, whose content distinguishes whether or not the broadcast type data manipulation operation is to be performed, while the rest of the beta field 1154 is interpreted as the vector length field 1159B. The memory access 1120 instruction templates include the scale field 1160, and optionally the displacement field 1162A or the displacement scale field 1162B.

With regard to the generic vector friendly instruction format 1100, a full opcode field 1174 is shown including the format field 1140, the base operation field 1142, and the data element width field 1164. While one embodiment is shown where the full opcode field 1174 includes all of these fields, the full opcode field 1174 includes less than all of these fields in embodiments that do not support all of them. The full opcode field 1174 provides the operation code (opcode).

The augmentation operation field 1150, the data element width field 1164, and the write mask field 1170 allow these features to be specified on a per instruction basis in the generic vector friendly instruction format.

The combination of write mask field and data element width field creates typed instructions in that they allow the mask to be applied based on different data element widths.

The various instruction templates found within class A and class B are beneficial in different situations. In some embodiments, different processors or different cores within a processor may support only class A, only class B, or both classes. For instance, a high-performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general-purpose cores, one of the graphics cores intended primarily for graphics and/or scientific computing may support only class A, while one or more of the general-purpose cores may be high-performance general-purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments. Programs written in a high level language would be put (e.g., JIT compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### EXEMPLARY SPECIFIC VECTOR FRIENDLY INSTRUCTION FORMAT

**Figure 5A** is a block diagram illustrating an exemplary specific vector friendly instruction format according to embodiments. **Figure 5A** shows a specific vector friendly instruction format 1200 that is specific in the sense that it specifies the location, size, interpretation, and order of the fields, as well as values for some of those fields. The specific vector friendly instruction format 1200 may be used to extend the x86 instruction set, and thus some of the fields are similar to or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 4** into which the fields from **Figure 5A** map are illustrated.

It should be understood that, although embodiments are described with reference to the specific vector friendly instruction format 1200 in the context of the generic vector friendly instruction format 1100 for illustrative purposes, the invention is not limited to the specific vector friendly instruction format 1200 except where claimed. For example, the generic vector friendly instruction format 1100 contemplates a variety of possible sizes for the various fields, while the specific vector friendly instruction format 1200 is shown as having fields of specific sizes. By way of specific example, while the data element width field 1164 is illustrated as a one-bit field in the specific vector friendly instruction format 1200, the invention is not so limited (that is, the generic vector friendly instruction format 1100 contemplates other sizes of the data element width field 1164).

The specific vector friendly instruction format 1200 includes the following fields listed below in the order illustrated in **Figure 5A****.**

EVEX Prefix 1202 (Bytes 0-3)- is encoded in a four-byte form.

Format Field 1140 (EVEX Byte 0, bits [7:0]) - the first byte (EVEX Byte 0) is the format field 1140 and it contains 0x62 (the unique value used for distinguishing the vector friendly instruction format) in one embodiment.

The second-fourth bytes (EVEX Bytes 1-3) include a number of bit fields providing specific capability.

REX field 1205 (EVEX Byte 1, bits [7-5]) - consists of an EVEX.R bit field (EVEX Byte 1, bit [7] - R), EVEX.X bit field (EVEX byte 1, bit [6] - X), and EVEX.B bit field EVEX byte 1, bit [5] - B). The EVEX.R, EVEX.X, and EVEX.B bit fields provide the same functionality as the corresponding VEX bit fields, and are encoded using 1s complement form, i.e., ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 1210 - this is the first part of the REX' field 1210 and is the EVEX.R' bit field (EVEX Byte 1, bit [4] - R') that is used to encode either the upper 16 or lower 16 of the extended 32 register set. In one embodiment, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 1215 (EVEX byte 1, bits [3:0] - mmmm) - its content encodes an implied leading opcode byte (0F, 0F 38, or 0F 3).

Data element width field 1164 (EVEX byte 2, bit [7] - W) - is represented by the notation EVEX.W. EVEX.W is used to define the granularity (size) of the datatype (either 32-bit data elements or 64-bit data elements).

EVEX.vwv 1220 (EVEX Byte 2, bits [6:3]-vvvv)- the role of EVEX.vvvv may include the following: 1) EVEX.vwv encodes the first source register operand, specified in inverted (Is complement) form and is valid for instructions with 2 or more source operands; 2) EVEX.vwv encodes the destination register operand, specified in 1s complement form for certain vector shifts; or 3) EVEX.vwv does not encode any operand, the field is reserved and should contain 1111b. Thus, FVFX.vvvv field 1220 encodes the 4 low-order bits of the first source register specifier stored in inverted (Is complement) form. Depending on the instruction, an extra different EVEX bit field is used to extend the specifier size to 32 registers.

EVEX.U 1168 Class field (EVEX byte 2, bit [2]-U) - If EVEX.U = 0, it indicates class A or EVEX.U0; if EVEX.U = 1, it indicates class B or EVEX.U1.

Prefix encoding field 1225 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's programmable logic array (PLA), so the PLA may execute both the legacy and EVEX format of these legacy instructions without modification. Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2-bit SIMD prefix encodings, and thus not require the expansion.

Alpha field 1152 (EVEX byte 3, bit [7]-EH; also known as EVEX.EH, EVEX.rs, EVEX.RL, EVEX.write mask control, and EVEX.N; also illustrated with α) - as previously described, this field is context specific.

Beta field 1154 (EVEX byte 3, bits [6:4]-SSS, also known as EVEX.s₂₋₀, EVEX.r₂₋₀, EVEX.rr1, EVEX.LLO, EVEX.LLB; also illustrated with βββ) - as previously described, this field is context specific.

REX' field 1210 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vwv

Write mask field 1170 (EVEX byte 3, bits [2:0]-kkk) - its content specifies the index of a register in the write mask registers as previously described. In one embodiment, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 1230 (Byte 4) is also known as the opcode byte. Part of the opcode is specified in this field.

MOD R/M Field 1240 (Byte 5) includes MOD field 1242, Reg field 1244, and R/M field 1246. As previously described, the MOD field's 1242 content distinguishes between memory access and non-memory access operations. The role of Reg field 1244 may be summarized to two situations: encoding either the destination register operand or a source register operand or be treated as an opcode extension and not used to encode any instruction operand. The role of R/M field 1246 may include the following: encoding the instruction operand that references a memory address or encoding either the destination register operand or a source register operand.

Scale, Index, Base (SIB) Byte (Byte 6) - As previously described, the content of SIB 1250 is used for memory address generation. SIB.xxx 1254 and SIB.bbb 1256 - the contents of these fields have been previously referred to with regard to the register indexes Xxxx and Bbbb.

Displacement field 1162A (Bytes 7-10) - when MOD field 1242 contains 10, bytes 7-10 are the displacement field 1162A, and it works the same as the legacy 32-bit displacement (disp32) and works at byte granularity.

Displacement factor field 1162B (Byte 7) - when MOD field 2642 contains 01, byte 7 is the displacement factor field 1162B. The location of this field is the same as that of the legacy x86 instruction set 8-bit displacement (disp8), which works at byte granularity. Since disp8 is sign extended, it may only address between -128 and 127 bytes offsets; in terms of 64-byte cache lines, disp8 uses 8 bits that may be set to only four really useful values -128, -64, 0, and 64; since a greater range is often needed, disp32 is used; however, disp32 requires 4 bytes. In contrast to disp8 and disp32, the displacement factor field 1162B is a reinterpretation of disp8; when using displacement factor field 1162B, the actual displacement is determined by the content of the displacement factor field multiplied by the size of the memory operand access (N). This type of displacement is referred to as disp8*N. This reduces the average instruction length (a single byte used for the displacement but with a much greater range). Such compressed displacement assumes that the effective displacement is multiple of the granularity of the memory access, and hence, the redundant low-order bits of the address offset do not need to be encoded. In other words, the displacement factor field 1162B substitutes the legacy x86 instruction set 8-bit displacement. Thus, the displacement factor field 1162B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 1172 operates as previously described.

### FULL OPCODE FIELD

**Figure 5B** is a block diagram illustrating the fields of the specific vector friendly instruction format 1200 that make up the full opcode field 1174 according to one embodiment. Specifically, the full opcode field 1174 includes the format field 1140, the base operation field 1142, and the data element width (W) field 1164. The base operation field 1142 includes the prefix encoding field 1225, the opcode map field 1215, and the real opcode field 1230.

### REGISTER INDEX FIELD

**Figure 5C** is a block diagram illustrating the fields of the specific vector friendly instruction format 1200 that make up the register index field 1144 according to one embodiment. Specifically, the register index field 1144 includes the REX 1205 field, the REX' 1210 field, the MODR/M.reg field 1244, the MODR/M.r/m field 1246, the VVVV field 1220, xxx field 1254, and the bbb field 1256.

### AUGMENTATION OPERATION FIELD

**Figure 5D** is a block diagram illustrating the fields of the specific vector friendly instruction format 1200 that make up the augmentation operation field 1150 according to one embodiment. When the class (U) field 1168 contains 0, it signifies EVEX.U0 (class A 1168A); when it contains 1, it signifies EVEX.U1 (class B 1168B). When U=0 and the MOD field 1242 contains 11 (signifying a no memory access operation), the alpha field 1152 (EVEX byte 3, bit [7] - EH) is interpreted as the rs field 1152A. When the rs field 1152A contains a 1 (round 1152A.1), the beta field 1154 (EVEX byte 3, bits [6:4]- SSS) is interpreted as the round control field 1154A. The round control field 1154A includes a one-bit SAE field 1156 and a two-bit round operation field 1158. When the rs field 1152A contains a 0 (data transform 1152A.2), the beta field 1154 (EVEX byte 3, bits [6:4]- SSS) is interpreted as a three-bit data transform field 1154B. When U=0 and the MOD field 1242 contains 00, 01, or 10 (signifying a memory access operation), the alpha field 1152 (EVEX byte 3, bit [7] - EH) is interpreted as the eviction hint (EH) field 1152B and the beta field 1154 (EVEX byte 3, bits [6:4]- SSS) is interpreted as a three-bit data manipulation field 1154C.

When U=1, the alpha field 1152 (EVEX byte 3, bit [7] - EH) is interpreted as the write mask control (Z) field 1152C. When U=1 and the MOD field 1242 contains 11 (signifying a no memory access operation), part of the beta field 1154 (EVEX byte 3, bit [4]- So) is interpreted as the RL field 1157A; when it contains a 1 (round 1157A.1) the rest of the beta field 1154 (EVEX byte 3, bit [6-5]- S₂₋₁) is interpreted as the round operation field 1159A, while when the RL field 1157A contains a 0 (VSIZE 1157A.2) the rest of the beta field 1154 (EVEX byte 3, bit [6-5]- S₂₋₁) is interpreted as the vector length field 1159B (EVEX byte 3, bit [6-5]- L₁₋₀). When U=1 and the MOD field 1242 contains 00, 01, or 10 (signifying a memory access operation), the beta field 1154 (EVEX byte 3, bits [6:4]- SSS) is interpreted as the vector length field 1159B (EVEX byte 3, bit [6-5]- L₁₋₀) and the broadcast field 1157B (EVEX byte 3, bit [4]- B).

### EXEMPLARY REGISTER ARCHITECTURE

**Figure 6** is a block diagram of a register architecture 1300 according to one embodiment. In the embodiment illustrated, there are 32 vector registers 1310 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 1200 operates on these overlaid register file as illustrated in the below tables.

| Adjustable Vector Length | Class | Operations | Registers |
|---|---|---|---|
| Instruction Templates that do not include the vector length field 1159B | A (**Figure 5**A; U=0) | 1110, 1115, 1125, 1130 | zmm registers (the vector length is 64 byte) |
| | B (**Figure 5**B; U=1) | 1112 | zmm registers (the vector length is 64 byte) |
| Instruction templates that do include the vector length field 1159B | B (**Figure 5**B; U=1) | 1117, 1127 | zmm, ymm, or xmm registers (the vector length is 64-byte, 32 byte, or 16 byte) depending on the vector length field 1159B |

In other words, the vector length field 1159B selects between a maximum length and one or more other shorter lengths, where each such shorter length is half the length of the preceding length; and instruction templates without the vector length field 1159B operate on the maximum vector length. Further, in one embodiment, the class B instruction templates of the specific vector friendly instruction format 1200 operate on packed or scalar single/double-precision floating point data and packed or scalar integer data. Scalar operations are operations performed on the lowest order data element position in a zmm/ymm/xmm register; the higher order data element positions are either left the same as they were prior to the instruction or zeroed depending on the embodiment.

Write mask registers 1315 - in the embodiment illustrated, there are 8 write mask registers (k0 through k7), each 64 bits in size. In an alternate embodiment, the write mask registers 1315 are 16 bits in size. As previously described, in one embodiment, the vector mask register k0 may not be used as a write mask; when the encoding that would normally indicate k0 is used for a write mask, it selects a hardwired write mask of 0xFFFF, effectively disabling write masking for that instruction.

General-purpose registers 1325 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1345, on which is aliased the MMX packed integer flat register file 1350 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments may use wider or narrower registers. Additionally, alternative embodiments may use more, less, or different register files and registers.

### EXEMPLARY CORE ARCHITECTURES, PROCESSORS, AND COMPUTER ARCHITECTURES

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### EXEMPLARY CORE ARCHITECTURES

### IN-ORDER AND OUT-OF-ORDER CORE BLOCK DIAGRAM

**Figure 7A** is a block diagram illustrating both an exemplary in-order pipeline and an exemplary register renaming, out-of-order issue/execution pipeline according to embodiments. **Figure 7B** is a block diagram illustrating both an exemplary embodiment of an in-order architecture core and an exemplary register renaming, out-of-order issue/execution architecture core to be included in a processor according to embodiments. The solid lined boxes in **Figures 7A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 7A****,** a processor pipeline 1400 includes a fetch stage 1402, a length decode stage 1404, a decode stage 1406, an allocation stage 1408, a renaming stage 1410, a scheduling (also known as a dispatch or issue) stage 1412, a register read/memory read stage 1414, an execute stage 1416, a write back/memory write stage 1418, an exception handling stage 1422, and a commit stage 1424.

**Figure 7B** shows processor core 1490 including a front-end unit 1430 coupled to an execution engine unit 1450, and both are coupled to a memory unit 1470. The core 1490 may be a reduced instruction set computing (RISC) core, a complex instruction set computing (CISC) core, a very long instruction word (VLIW) core, or a hybrid or alternative core type. As yet another option, the core 1490 may be a special-purpose core, such as, for example, a network or communication core, compression engine, coprocessor core, general purpose computing graphics processing unit (GPGPU) core, graphics core, or the like.

The front-end unit 1430 includes a branch prediction unit 1432 coupled to an instruction cache unit 1434, which is coupled to an instruction translation lookaside buffer (TLB) unit 1436, which is coupled to an instruction fetch unit 1438, which is coupled to a decode unit 1440. The decode unit 1440 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1440 may be implemented using various different mechanisms. Examples of suitable mechanisms include, but are not limited to, look-up tables, hardware implementations, PLAs, microcode read only memories (ROMs), etc. In one embodiment, the core 1490 includes a microcode ROM or other medium that stores microcode for certain macroinstructions (e.g., in decode unit 1440 or otherwise within the front-end unit 1430). The decode unit 1440 is coupled to a rename/allocator unit 1452 in the execution engine unit 1450.

The execution engine unit 1450 includes the rename/allocator unit 1452 coupled to a retirement unit 1454 and a set of one or more scheduler unit(s) 1456. The scheduler unit(s) 1456 represents any number of different schedulers, including reservations stations, central instruction window, etc. The scheduler unit(s) 1456 is coupled to the physical register file(s) unit(s) 1458. Each of the physical register file(s) units 1458 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 1458 comprises a vector registers unit, a write mask registers unit, and a scalar registers unit. These register units may provide architectural vector registers, vector mask registers, and general-purpose registers. The physical register file(s) unit(s) 1458 is overlapped by the retirement unit 1454 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1454 and the physical register file(s) unit(s) 1458 are coupled to the execution cluster(s) 1460. The execution cluster(s) 1460 includes a set of one or more execution units 1462 and a set of one or more memory access units 1464. The execution units 1462 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1456, physical register file(s) unit(s) 1458, and execution cluster(s) 1460 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1464). It should also be understood that where separate pipelines are used, one or more of these pipelines may be out-of-order issue/execution and the rest in-order.

The set of memory access units 1464 is coupled to the memory unit 1470, which includes a data TLB unit 1472 coupled to a data cache unit 1474 coupled to a level 2 (L2) cache unit 1476. In one exemplary embodiment, the memory access units 1464 may include a load unit, a store address unit, and a store data unit, each of which is coupled to the data TLB unit 1472 in the memory unit 1470. The instruction cache unit 1434 is further coupled to a level 2 (L2) cache unit 1476 in the memory unit 1470. The L2 cache unit 1476 is coupled to one or more other levels of cache and eventually to a main memory.

By way of example, the exemplary register renaming, out-of-order issue/execution core architecture may implement the pipeline 1400 as follows: 1) the instruction fetch 1438 performs the fetch and length decoding stages 1402 and 1404; 2) the decode unit 1440 performs the decode stage 1406; 3) the rename/allocator unit 1452 performs the allocation stage 1408 and renaming stage 1410; 4) the scheduler unit(s) 1456 performs the schedule stage 1412; 5) the physical register file(s) unit(s) 1458 and the memory unit 1470 perform the register read/memory read stage 1414; the execution cluster 1460 perform the execute stage 1416; 6) the memory unit 1470 and the physical register file(s) unit(s) 1458 perform the write back/memory write stage 1418; 7) various units may be involved in the exception handling stage 1422; and 8) the retirement unit 1454 and the physical register file(s) unit(s) 1458 perform the commit stage 1424.

The core 1490 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1490 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 1434/1474 and a shared L2 cache unit 1476, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### SPECIFIC EXEMPLARY IN-ORDER CORE ARCHITECTURE

**Figures 8A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 8A** is a block diagram of a single processor core, along with its connection to the on-die interconnect network 1502 and with its local subset of the Level 2 (L2) cache 1504, according to embodiments. In one embodiment, an instruction decoder 1500 supports the x86 instruction set with a packed data instruction set extension. An L1 cache 1506 allows low-latency accesses to cache memory into the scalar and vector units. While in one embodiment (to simplify the design), a scalar unit 1508 and a vector unit 1510 use separate register sets (respectively, scalar registers 1512 and vector registers 1514) and data transferred between them is written to memory and then read back in from a level 1 (L1) cache 1506, alternative embodiments may use a different approach (e.g., use a single register set or include a communication path that allow data to be transferred between the two register files without being written and read back).

The local subset of the L2 cache 1504 is part of a global L2 cache that is divided into separate local subsets, one per processor core. Each processor core has a direct access path to its own local subset of the L2 cache 1504. Data read by a processor core is stored in its L2 cache subset 1504 and may be accessed quickly, in parallel with other processor cores accessing their own local L2 cache subsets. Data written by a processor core is stored in its own L2 cache subset 1504 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 8B** is an expanded view of part of the processor core in **Figure 8A** according to embodiments. **Figure 8B** includes an L1 data cache 1506A as part of the L1 cache 1506, as well as more detail regarding the vector unit 1510 and the vector registers 1514. Specifically, the vector unit 1510 is a 16-wide vector processing unit (VPU) (see the 16-wide ALU 1528), which executes one or more of integer, single-precision float, and double-precision float instructions. The VPU supports swizzling the register inputs with swizzle unit 1520, numeric conversion with numeric convert units 1522A-B, and replication with replication unit 1524 on the memory input. Write mask registers 1526 allow predicating resulting vector writes.

**Figure 9** is a block diagram of a processor 1600 that may have more than one core, may have an integrated memory controller, and may have integrated graphics according to embodiments. The solid lined boxes in **Figure 9** illustrate a processor 1600 with a single core 1602A, a system agent unit 1610, a set of one or more bus controller units 1616, while the optional addition of the dashed lined boxes illustrates an alternative processor 1600 with multiple cores 1602A-N, a set of one or more integrated memory controller unit(s) 1614 in the system agent unit 1610, and special purpose logic 1608.

Thus, different implementations of the processor 1600 may include: 1) a CPU with the special purpose logic 1608 being integrated graphics and/or scientific (throughput) logic (which may include one or more cores), and the cores 1602A-N being one or more general purpose cores (e.g., general purpose in-order cores, general purpose out-of-order cores, a combination of the two); 2) a coprocessor with the cores 1602A-N being a large number of special purpose cores intended primarily for graphics and/or scientific (throughput); and 3) a coprocessor with the cores 1602A-N being a large number of general purpose in-order cores. Thus, the processor 1600 may be a general-purpose processor, coprocessor, or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1600 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1606, and external memory (not shown) coupled to the set of integrated memory controller units 1614. The set of shared cache units 1606 may include one or more mid-level caches, such as level 2 (L2), level 3 (L3), level 4 (L4), or other levels of cache, a last level cache (LLC), and/or combinations thereof. While in one embodiment a ring-based interconnect unit 1612 interconnects the special purpose logic 1608 (integrated graphics logic is an example of and is also referred to herein as special purpose logic), the set of shared cache units 1606, and the system agent unit 1610/integrated memory controller unit(s) 1614, alternative embodiments may use any number of well-known techniques for interconnecting such units. In one embodiment, coherency is maintained between one or more cache units 1606 and cores 1602A-N.

In some embodiments, one or more of the cores 1602A-N are capable of multithreading. The system agent 1610 includes those components coordinating and operating cores 1602A-N. The system agent unit 1610 may include for example a power control unit (PCU) and a display unit. The PCU may be or include logic and components needed for regulating the power state of the cores 1602A-N and the special purpose logic 1608. The display unit is for driving one or more externally connected displays.

The cores 1602A-N may be homogenous or heterogeneous in terms of architecture instruction set; that is, two or more of the cores 1602A-N may be capable of execution the same instruction set, while others may be capable of executing only a subset of that instruction set or a different instruction set.

### EXEMPLARY COMPUTER ARCHITECTURES

**Figures 10-13** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, handheld devices, and various other electronic devices, are also suitable. In general, a huge variety of systems or electronic devices capable of incorporating a processor and/or other execution logic as disclosed herein are generally suitable.

Referring now to **Figure 10****,** shown is a block diagram of a system 1700 in accordance with one embodiment. The system 1700 may include one or more processors 1710, 1715, which are coupled to a controller hub 1720. In one embodiment the controller hub 1720 includes a graphics memory controller hub (GMCH) 1790 and an Input/Output Hub (IOH) 1750 (which may be on separate chips); the GMCH 1790 includes memory and graphics controllers to which are coupled memory 1740 and a coprocessor 1745; the IOH 1750 couples input/output (I/O) devices 1760 to the GMCH 1790. Alternatively, one or both of the memory and graphics controllers are integrated within the processor (as described herein), the memory 1740 and the coprocessor 1745 are coupled directly to the processor 1710, and the controller hub 1720 in a single chip with the IOH 1750.

The optional nature of additional processors 1715 is denoted in **Figure 10** with broken lines. Each processor 1710, 1715 may include one or more of the processing cores described herein and may be some version of the processor 1600.

The memory 1740 may be, for example, dynamic random-access memory (DRAM), phase change memory (PCM), or a combination of the two. For at least one embodiment, the controller hub 1720 communicates with the processor(s) 1710, 1715 via a multi-drop bus, such as a frontside bus (FSB), point-to-point interface such as QuickPath Interconnect (QPI), or similar connection 1795.

In one embodiment, the coprocessor 1745 is a special-purpose processor, such as, for example, a high-throughput MIC processor, a network or communication processor, compression engine, graphics processor, GPGPU, embedded processor, or the like. In one embodiment, controller hub 1720 may include an integrated graphics accelerator.

There may be a variety of differences between the physical resources 1710, 1715 in terms of a spectrum of metrics of merit including architectural, microarchitectural, thermal, power consumption characteristics, and the like.

In one embodiment, the processor 1710 executes instructions that control data processing operations of a general type. Embedded within the instructions may be coprocessor instructions. The processor 1710 recognizes these coprocessor instructions as being of a type that should be executed by the attached coprocessor 1745. Accordingly, the processor 1710 issues these coprocessor instructions (or control signals representing coprocessor instructions) on a coprocessor bus or other interconnect, to coprocessor 1745. Coprocessor(s) 1745 accept and execute the received coprocessor instructions.

Referring now to **Figure 11****,** shown is a block diagram of a first more specific exemplary system 1800 in accordance with an embodiment. As shown in **Figure 11****,** multiprocessor system 1800 is a point-to-point interconnect system, and includes a first processor 1870 and a second processor 1880 coupled via a point-to-point interconnect 1850. Each of processors 1870 and 1880 may be some version of the processor 1600. In one embodiment, processors 1870 and 1880 are respectively processors 1710 and 1715, while coprocessor 1838 is coprocessor 1745. In another embodiment, processors 1870 and 1880 are respectively processor 1710 coprocessor 1745.

Processors 1870 and 1880 are shown including integrated memory controller (IMC) units 1872 and 1882, respectively. Processor 1870 also includes as part of its bus controller unit's point-to-point (P-P) interfaces 1876 and 1878; similarly, second processor 1880 includes P-P interfaces 1886 and 1888. Processors 1870, 1880 may exchange information via a point-to-point (P-P) interface 1850 using P-P interface circuits 1878, 1888. As shown in **Figure 11****,** IMCs 1872 and 1882 couple the processors to respective memories, namely a memory 1832 and a memory 1834, which may be portions of main memory locally attached to the respective processors.

Processors 1870, 1880 may each exchange information with a chipset 1890 via individual P-P interfaces 1852, 1854 using point to point interface circuits 1876, 1894, 1886, 1898. Chipset 1890 may optionally exchange information with the coprocessor 1838 via a high-performance interface 1892. In one embodiment, the coprocessor 1838 is a special-purpose processor, such as, for example, a high-throughput MIC processor, a network or communication processor, compression engine, graphics processor, GPGPU, embedded processor, or the like.

A shared cache (not shown) may be included in either processor or outside of both processors yet connected with the processors via P-P interconnect, such that either or both processors' local cache information may be stored in the shared cache if a processor is placed into a low power mode.

Chipset 1890 may be coupled to a first bus 1816 via an interface 1896. In one embodiment, first bus 1816 may be a Peripheral Component Interconnect (PCI) bus, or a bus such as a PCI Express bus or another third generation I/O interconnect bus, although the scope of the present invention is not so limited.

As shown in **Figure 11****,** various I/O devices 1814 may be coupled to first bus 1816, along with a bus bridge 1818 which couples first bus 1816 to a second bus 1820. In one embodiment, one or more additional processor(s) 1815, such as coprocessors, high-throughput MIC processors, GPGPU's, accelerators (such as, e.g., graphics accelerators or digital signal processing (DSP) units), field programmable gate arrays, or any other processor, are coupled to first bus 1816. In one embodiment, second bus 1820 may be a low pin count (LPC) bus. Various devices may be coupled to a second bus 1820 including, for example, a keyboard and/or mouse 1822, communication devices 1827 and a storage unit 1828 such as a disk drive or other mass storage device which may include instructions/code and data 1830, in one embodiment. Further, an audio I/O 1824 may be coupled to the second bus 1820. Note that other architectures are possible. For example, instead of the point-to-point architecture of **Figure 11****,** a system may implement a multi-drop bus or other such architecture.

Referring now to **Figure 12****,** shown is a block diagram of a second more specific exemplary system 1900 in accordance with an embodiment. Like elements in **Figures 11** **and** **12** bear like reference numerals, and certain aspects of **Figure 11** have been omitted from **Figure 12** in order to avoid obscuring other aspects of **Figure 11****.**

**Figure 12** illustrates that the processors 1870, 1880 may include integrated memory and I/O control logic ("CL") 1972 and 1982, respectively. Thus, the CL 1972, 1982 include integrated memory controller units and include I/O control logic. **Figure 12** illustrates that not only are the memories 1832, 1834 coupled to the CL 3372, 3382, but also that I/O devices 3314 are also coupled to the control logic 3372, 3382. Legacy I/O devices 3315 are coupled to the chipset 1890.

Referring now to **Figure 13****,** shown is a block diagram of a SoC 2000 in accordance with an embodiment. Similar elements in **Figure 13** bear like reference numerals. Also, dashed lined boxes are optional features on more advanced SoCs. In **Figure 13****,** an interconnect unit(s) 2002 is coupled to: an application processor 2010 which includes a set of one or more cores 1602A-N, which include cache units 1604A-N, and shared cache unit(s) 1606; a system agent unit 1610; a bus controller unit(s) 1616; an integrated memory controller unit(s) 1614; a set or one or more coprocessors 2020 which may include integrated graphics logic, an image processor, an audio processor, and a video processor; an static random access memory (SRAM) unit 2030; a direct memory access (DMA) unit 2032; and a display unit 2040 for coupling to one or more external displays. In one embodiment, the coprocessor(s) 2020 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments may be implemented as computer programs or program code executing on programmable systems comprising at least one processor, a storage system (including volatile and non-volatile memory and/or storage elements), at least one input device, and at least one output device.

Program code, such as code 1830 illustrated in **Figure 11****,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores," may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments also include non-transitory, tangible machine-readable media containing instructions or containing design data, such as Hardware Description Language (HDL), which defines structures, circuits, apparatuses, processors and/or system features described herein. Such embodiments may also be referred to as program products.

### EMULATION (INCLUDING BINARY TRANSLATION, CODE MORPHING, ETC.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

**Figure 14** is a block diagram contrasting the use of a software instruction converter to convert binary instructions in a source instruction set to binary instructions in a target instruction set according to embodiments. In the illustrated embodiment, the instruction converter is a software instruction converter, although alternatively the instruction converter may be implemented in software, firmware, hardware, or various combinations thereof. **Figure 14** shows a program in a high-level language 2102 may be compiled using an x86 compiler 2104 to generate x86 binary code 2106 that may be natively executed by a processor with at least one x86 instruction set core 2116. The processor with at least one x86 instruction set core 2116 represents any processor that may perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 2104 represents a compiler that is operable to generate x86 binary code 2106 (e.g., object code) that may, with or without additional linkage processing, be executed on the processor with at least one x86 instruction set core 2116. Similarly, **Figure 14** shows the program in the high-level language 2102 may be compiled using an alternative instruction set compiler 2108 to generate alternative instruction set binary code 2110 that may be natively executed by a processor without at least one x86 instruction set core 2114 (e.g., a processor with cores that execute the MIPS instruction set of MIPS Technologies of Sunnyvale, CA and/or that execute the ARM instruction set of ARM Holdings of Sunnyvale, CA). The instruction converter 2112 is used to convert the x86 binary code 2106 into code that may be natively executed by the processor without an x86 instruction set core 2114. This converted code is not likely to be the same as the alternative instruction set binary code 2110 because an instruction converter capable of this is difficult to make; however, the converted code will accomplish the general operation and be made up of instructions from the alternative instruction set. Thus, the instruction converter 2112 represents software, firmware, hardware, or a combination thereof that, through emulation, simulation, or any other process, allows a processor or other electronic device that does not have an x86 instruction set processor or core to execute the x86 binary code 2106.

### EXAMPLES

In embodiments, an apparatus includes speculation vulnerability mitigation hardware to implement one or more of a plurality of speculation vulnerability mitigation mechanisms; and speculation vulnerability detection hardware to detect vulnerability to a speculative execution attack and to provide to software an indication of speculative execution attack vulnerability.

Any such embodiments may include any of the following aspects. Detection is based on conditions indicative of a speculative execution attack. The indication includes a prediction. The indication includes a confidence level for the prediction. The indication includes a category of speculative execution attack. The apparatus includes one or more registers to provide the indication to software. At least one of the one or more of the plurality of speculation vulnerability mitigation mechanisms is configurable by the software. The apparatus includes one or more registers to provide for the software to configure the at least one of the one or more of the plurality of speculation vulnerability mitigation mechanisms. At least one of the one or more registers is to store a weights vector including a plurality of elements, each element to indicate one of a plurality of weights to apply to a corresponding one of the plurality speculation vulnerability mitigation mechanisms. The apparatus includes an instruction decoder to decode one or more instructions to configure the at least one of the one or more of the plurality of speculation vulnerability mitigation mechanisms. The plurality of speculation vulnerability mitigation mechanisms includes a restricted speculative execution mode.

In embodiments, a method includes detecting, by speculation vulnerability detection hardware in a processor, vulnerability of the processor to a speculative execution attack; providing, to software, an indication of speculative execution attack vulnerability; and implementing, by speculation vulnerability mitigation hardware in the processor, one or more of a plurality of speculation vulnerability mitigation mechanisms.

Any such embodiments may include any of the following aspects. At least one of the one or more of a plurality of speculation vulnerability mitigation mechanisms is pre-configured by default. The method includes receiving, from the software, configuration information to reconfigure the at least one of the one or more of the plurality of speculation vulnerability mechanisms. Receiving the configuration information includes executing one or more instructions to reconfigure the at least one of the one or more of the plurality of speculation vulnerability mechanisms. Executing the one or more instructions includes loading the configuration information into one or more registers. At least one of the one or more registers is to store a weights vector including a plurality of elements, each element to indicate one of a plurality of weights to apply to a corresponding one of the plurality speculation vulnerability mechanisms. The method includes dynamically reconfiguring the corresponding one of the plurality speculation vulnerability mechanisms, based on the weights vector.

In embodiments, a system includes a memory controller to couple a processor core to a memory; and the processor core to execute instructions to be fetched by the memory controller from application software in the memory, the processor core including speculation vulnerability mitigation hardware to implement one or more of a plurality of speculation vulnerability mitigation mechanisms; and speculation vulnerability detection hardware to detect vulnerability to a speculative execution attack in connection with execution of the instructions and to provide to system software an indication of speculative execution attack vulnerability.

Any such embodiments may include any of the following aspects. The system software is to configure the speculation vulnerability mitigation hardware in response to the indication and based on a speculation vulnerability mitigation policy.

In embodiments, an apparatus includes decode circuitry to decode a single instruction to mitigate vulnerability to a speculative execution attack; and execution circuitry, coupled to the decode circuitry, to be hardened in response to the single instruction.

Any such embodiments may include any of the following aspects. The single instruction is to indicate one or more micro-architectural structures of the execution circuitry to be hardened. The single instruction is to indicate one or more conditions under which the execution circuitry is to be hardened. The single instruction is to indicate one or more micro-architectural changes to be prevented. The single instruction is to indicate a hardening mode vector including a plurality of fields, each field corresponding to one of a plurality of hardening mechanisms. The apparatus includes a hardening mode register to store a hardening mode vector including a plurality of fields, each field corresponding to one of a plurality of hardening mechanisms. The single instruction is to indicate that one or more front-end structures are to be hardened. The single instruction is to indicate that one or more back-end structures of the execution circuitry are to be hardened. The single instruction is to indicate that one or more memory structures of the execution circuitry are to be hardened. The single instruction is to indicate that one or more branch prediction structures of the execution circuitry are to be hardened. The single instruction is to indicate that changes to a cache, a buffer, or a register are to be prevented. The single instruction is to indicate that changes to branch prediction state are to be prevented.

In embodiments, a method includes decoding, by a processor, a first invocation of a single instruction to mitigate vulnerability to a speculative execution attack; and hardening, in response to the first invocation of the single instruction, one or more micro-architectural structures in the processor.

Any such embodiments may include any of the following aspects. The single instruction is to indicate one or more conditions under which the one or more of the micro-architectural structures are to be hardened. The single instruction is to indicate one or more micro-architectural changes to be prevented. The single instruction is to indicate a hardening mode vector including a plurality of fields, each field corresponding to one of a plurality of hardening mechanisms. Hardening includes preventing changes to a cache, a buffer, or a register. The method includes decoding, by the processor, a second invocation of the single instruction; and relaxing, in response to the second invocation of the single instruction, the hardening of the one or more micro-architectural structures.

In embodiments, a non-transitory machine-readable medium stores a plurality of instructions, including a single instruction which, when executed by a machine, causes the machine to perform a method including storing a hardening mode vector indicated by the single instruction, the hardening mode vector including a plurality of fields, each field corresponding to one of a plurality of hardening mechanisms; and hardening, based on the hardening mode vector, one or more micro-architectural structures in the machine.

Any such embodiments may include any of the following aspects. The method includes preventing changes to a cache, a buffer, or a register.

In embodiments, an apparatus includes decode circuitry to decode a load hardening instruction to mitigate vulnerability to a speculative execution attack; and load circuitry, coupled to the decode circuitry, to be hardened in response to the load hardening instruction.

Any such embodiments may include any of the following aspects. The load circuitry is to be hardened to prevent a load operation from being performed. The load circuitry is to be hardened to prevent a load operation from leaving a side channel based on data to be loaded by the load operation. The load circuitry is to be hardened to prevent execution of a dependent instruction, wherein the dependent instruction is dependent on data to be loaded by a load operation. The load circuitry is to be hardened to prevent execution of a dependent instruction from leaving a side channel, wherein the dependent instruction is dependent on data to be loaded by a load operation. The load circuitry is to be hardened to prevent allocation of a cache line for data to be loaded by a load operation. Hardening of the load circuitry is to be relaxed in response to retirement of a speculative load instruction. Hardening of the load circuitry is to be relaxed in response to a speculative load operation becoming non-speculative. Hardening of the load circuitry is to be relaxed in response to a speculative load operation becoming non-speculative based on resolution of a branch condition. Hardening of the load circuitry is to be relaxed in response to a speculative load operation becoming non-speculative based on retirement of a branch instruction. The load circuitry is to be hardened to prevent a load operation from bypassing a store operation. The load circuitry is to be hardened to prevent speculative data from being loaded. The load circuitry is to be hardened to prevent a speculative store bypass. The load circuitry is to be hardened to prevent dependence of load latency on data to be loaded.

In embodiments, a method includes decoding, by a processor, a load hardening instruction to mitigate vulnerability to a speculative execution attack; and hardening, in response to the load hardening instruction, load circuitry in the processor.

Any such embodiments may include any of the following aspects. Hardening the load circuitry includes preventing a load operation from being performed. The method includes decoding a load instruction; performing a first operation in response to the load instruction; preventing a second operation in response to the load operation, wherein preventing the second operation prevents the load instruction from leaving a side channel. The method includes decoding a load instruction; and relaxing hardening of the load circuitry in response to retirement of the load instruction.

In embodiments, a non-transitory machine-readable medium stores a plurality of instructions, including a load hardening instruction and a load instruction, wherein execution of the plurality of instructions by a machine causes the machine to perform a method including hardening load circuitry in the machine in response to the load hardening instruction; performing a hardened load operation speculatively in response to the load instruction; and retiring the load instruction; and relaxing hardening of the load circuitry in response to retiring the load instruction.

Any such embodiments may include any of the following aspects. The plurality of instructions includes a dependent instruction, the dependent instruction is dependent on data to be loaded by the load instruction, and hardening the load circuitry includes preventing execution of the dependent instruction.

In embodiments, an apparatus includes decode circuitry to decode a store hardening instruction to mitigate vulnerability to a speculative execution attack; and store circuitry, coupled to the decode circuitry, to be hardened in response to the store hardening instruction.

Any such embodiments may include any of the following aspects. The store circuitry is to be hardened to prevent a store operation from being performed. The store circuitry is to be hardened to prevent a store operation from leaving a side channel based on data to be stored by the store operation. The store circuitry is to be hardened to prevent execution of a dependent instruction, wherein the dependent instruction is dependent on data to be stored by a store operation. The store circuitry is to be hardened to prevent execution of a dependent instruction from leaving a side channel, wherein the dependent instruction is dependent on store-to-load forwarded data from a store operation. The store circuitry is to be hardened to prevent allocation of a cache line for data to be stored by a store operation. Hardening of the store circuitry is to be relaxed in response to retirement of a store instruction. Hardening of the store circuitry is to be relaxed in response to a store operation becoming non-speculative. Hardening of the store circuitry is to be relaxed in response to a store operation becoming non-speculative based on resolution of a branch condition. Hardening of the store circuitry is to be relaxed in response to a store operation becoming non-speculative based on retirement of a branch instruction. The store circuitry is to be hardened to prevent a load operation from bypassing a store operation. The store circuitry is to be hardened to prevent speculative data from being stored. The store circuitry is to be hardened to prevent a speculative store bypass. The store circuitry is to be hardened to prevent dependence of store latency on data to be stored.

In embodiments, a method includes decoding, by a processor, a store hardening instruction to mitigate vulnerability to a speculative execution attack; and hardening, in response to the store hardening instruction, store circuitry in the processor.

Any such embodiments may include any of the following aspects. Hardening the store circuitry includes preventing a store operation from being performed. The method includes decoding a store instruction; performing a first operation in response to the store instruction; preventing a second operation in response to the store operation, wherein preventing the second operation prevents the store instruction from leaving a side channel. The method includes decoding a store instruction; and relaxing hardening of the store circuitry in response to retirement of the store instruction.

In embodiments, a non-transitory machine-readable medium stores a plurality of instructions, including a store hardening instruction and a store instruction, wherein execution of the plurality of instructions by a machine causes the machine to perform a method including hardening store circuitry in the machine in response to the store hardening instruction; performing a hardened store operation speculatively in response to the store instruction; retiring the store instruction; and relaxing hardening of the store circuitry in response to retiring the store instruction.

Any such embodiments may include any of the following aspects. The plurality of instructions includes a dependent instruction, the dependent instruction is dependent on data to be stored by the store instruction, and hardening the store circuitry includes preventing execution of the dependent instruction.

In embodiments, an apparatus includes decode circuitry to decode a branch hardening instruction to mitigate vulnerability to a speculative execution attack; and branch circuitry, coupled to the decode circuitry, to be hardened in response to the branch hardening instruction.

Any such embodiments may include any of the following aspects. The branch circuitry is to be hardened to prevent a speculative branch from being taken. The branch circuitry is to be hardened to prevent branch prediction. The branch circuitry is to be hardened to mispredict a branch to a safe location. The branch circuitry is to be hardened to harden a load operation in the shadow of a branch. The branch circuitry is to be hardened to delay a branch. The branch is to be delayed until a branch condition is resolved. The branch is to be delayed until a corresponding branch instruction is retired. The branch is to be delayed until a branch termination instruction is received. The branch is to be delayed until the branch is known to be safe.

In embodiments, a method includes decoding, by a processor, a branch hardening instruction to mitigate vulnerability to a speculative execution attack; and hardening, in response to the branch hardening instruction, branch circuitry in the processor.

Any such embodiments may include any of the following aspects. Hardening the branch circuitry includes preventing a speculative branch from being taken. Hardening the branch circuitry includes preventing branch prediction. Hardening the branch circuitry includes mispredicting a branch to a safe location. Hardening a load operation in the shadow of a branch. Hardening the branch circuitry includes delaying a branch. The branch is delayed until a branch condition is resolved. The branch is delayed until a corresponding branch instruction is retired.

In embodiments, a non-transitory machine-readable medium stores a plurality of instructions, including a branch hardening instruction and a branch instruction, wherein execution of the plurality of instructions by a machine causes the machine to perform a method including hardening branch circuitry in the machine in response to the branch hardening instruction; delaying a branch to be taken in response to the branch instruction; retiring the branch instruction; and relaxing hardening of the branch circuitry in response to retiring the branch instruction.

Any such embodiments may include any of the following aspects. The plurality of instructions includes a branch condition resolution instruction, the branch condition resolution instruction is to resolve a branch condition, and delaying the branch continues until the branch condition is resolved.

In embodiments, an apparatus includes decode circuitry to decode a register hardening instruction to mitigate vulnerability to a speculative execution attack; and execution circuitry, coupled to the decode circuitry, to be hardened in response to the register hardening instruction.

Any such embodiments may include any of the following aspects. The execution circuitry is to be hardened to fence a register. The execution circuitry is to be hardened to prevent speculative execution of an instruction to load a register. The execution circuitry is to be hardened to prevent speculative execution of an instruction to use content of a register. The execution circuitry is to be hardened to prevent a speculative operation from using content of a register. The execution circuitry is to be hardened to prevent data forwarding from a register to a dependent operation. The execution circuitry is to be hardened to prevent execution of an instruction using content of a register to leave a side channel. The execution circuitry is to be hardened to prevent allocation of a cache line based on execution of an instruction using content of a register. Hardening of the execution circuitry is to be relaxed in response to retirement of an instruction to load a register. Hardening of the execution circuitry is to be relaxed in response to retirement of an instruction to use content of a register. Hardening of the execution circuitry is to be relaxed in response to a register load operation becoming non-speculative. Hardening of the execution circuitry is to be relaxed in response to an operation to use content of a register becoming non-speculative. Hardening of the execution circuitry is to be relaxed in response to resolution of a branch condition. Hardening of the execution circuitry is to be relaxed in response to resolution of a fence condition. The execution circuitry is to be hardened to prevent dependence of latency of an operation on data stored in a register.

In embodiments, a method includes decoding, by a processor, a register hardening instruction to mitigate vulnerability to a speculative execution attack; and hardening, in response to the register hardening instruction, execution circuitry in the processor.

Any such embodiments may include any of the following aspects. Hardening the execution circuitry includes fencing a register. Hardening the execution circuitry includes preventing a speculative operation from using content of a register.

In embodiments, a non-transitory machine-readable medium stores a plurality of instructions, including a first instruction and a second instruction, wherein execution of the plurality of instructions by a machine causes the machine to perform a method including hardening execution circuitry in the machine in response to the first instruction to mitigate vulnerability to a speculative execution attack; preventing a speculative operation to be performed in response to the second instruction from using content of a register.

Any such embodiments may include any of the following aspects. The method includes relaxing hardening in response to the speculative operation becoming non-speculative.

In embodiments, an apparatus includes speculation vulnerability detection hardware to detect vulnerability to a speculative execution attack and, in connection with a detection of vulnerability to a speculative execution attack, to provide an indication that data from a first operation is tainted; execution hardware to perform a second operation using the data if the second operation is to be performed non-speculatively and to prevent performance of the second operation if the second operation is to be performed speculatively and the data is tainted.

Any such embodiments may include any of the following aspects. The execution hardware is also to perform the second operation if the data is untainted. The speculation vulnerability detection hardware is to mark the data as tainted. The speculation vulnerability detection hardware is to mark the data as to be tracked. The indication is to be provided to software. The apparatus is to mark the data as tainted in response to a request from the software. The apparatus also includes an instruction decoder to decode an instruction to mark the data as tainted. The data is to be tracked by adding a bit to the data. The apparatus including tracking hardware to maintain a list of locations tainted data is stored. The second operation is a load operation, and the data is to be used as an address for the load operation.

In embodiments, a method includes detecting, by speculation vulnerability detection hardware, a vulnerability to a speculative execution attack; providing, in connection with a detection of vulnerability to a speculative execution attack, an indication that data from a first operation is tainted; and preventing performance of a second operation using the data if the second operation is to be performed speculatively and the data is tainted.

Any of such embodiments may include any of the following aspects. The method includes performing the second operation is the second operation is to be performed non-speculatively or the data is untainted. The method includes marking the data as tainted. The method includes marking the data as to be tracked. The indication is provided to software. The method includes marking the data as tainted in response to a request from the software. The method includes decoding an instruction to mark the data as tainted. The second operation is a load operation, and the data is to be used as an address for the load operation.

In embodiments, a system includes a memory controller to couple a processor core to a memory; the processor core to execute instructions to be fetched by the memory controller from application software in the memory, the processor core including speculation vulnerability detection hardware to detect a vulnerability to a speculative execution attack and, in connection with a detection of vulnerability to a speculative execution attack during execution of the instructions, to provide an indication that data from a first operation is tainted; and execution hardware to perform a second operation using the data if the second operation is to be performed non-speculatively and to prevent performance of the second operation if the second operation is to be performed speculatively and the data is tainted.

Any of such embodiments may include any of the following aspects. The indication is to be provided to system software in the memory and the processor core is to mark the data as tainted in response to a request from the system software.

In embodiments, an apparatus includes a hybrid key generator and memory protection hardware. The hybrid key generator is to generate a hybrid key based on a public key and multiple process identifiers. Each of the process identifiers corresponds to one or more memory spaces in a memory. The memory protection hardware is to use the first hybrid key to protect to the memory spaces.

Any such embodiments may include any of the following aspects. The first public key is to be obtained from a first website. The first public key is to be obtained from a first certificate for the first website. At least one of the first plurality of process identifiers is to identify a first web browser process, wherein the first website is accessible through the first web browser process. Each of the first plurality of process identifiers is to identify one of a plurality of web browser processes, wherein the first website is accessible through all of the plurality of web browser processes. At least one of the first plurality of memory spaces is accessible through a first memory access structure, the first memory access structure to control access based on the first hybrid key. Use of the first hybrid key by the memory protection hardware is to include associating the first hybrid key with each of a first plurality of memory access structures. Use of the first hybrid key by the memory protection hardware is to include allowing access from a first plurality of processes, including the first web browser process, to the first plurality of memory spaces and preventing access from a second process to the first plurality of memory spaces. The second process is a second web browser process to access a second website. The memory protection hardware is also to use a second hybrid key to protect a second memory space corresponding to the second web browser process. The second memory space is accessible through a second memory access structure, the second memory access structure to control access based on the second hybrid key. Protection of the first plurality of memory spaces and the second memory space by the memory protection hardware is to include associating the second hybrid key with the second memory access structure. The hybrid key generator is also to generate the second key based on a second public key and a second plurality of process identifiers, each of second plurality of process identifiers corresponding to one of a second plurality of memory spaces including the second memory space. The second public key is to be obtained from a second website. A first of the first plurality of process identifiers is to identify a process to store web content in a corresponding one of the first plurality of memory spaces. The web content is to include one of more of just-in-time code, compiled code, and web application content.

In embodiments, a method includes generating a first hybrid key based on a first public key and a first plurality of process identifiers, each of first plurality of process identifiers corresponding to one or more of a first plurality of memory spaces in a memory; and using the first hybrid key to control access to the first plurality of memory spaces.

Any such embodiments may include any of the following aspects. The method includes receiving the first public key from a first website. The method includes associating the first hybrid key with each of a first plurality of memory access structures, each of the first plurality of memory access structures to control access to a corresponding one of the first plurality of memory spaces. Using the first hybrid key to control access to the first plurality of memory spaces includes allowing access from a first plurality of web browser processes to the first plurality of memory spaces and preventing access from a second process to the first plurality of memory spaces.

In embodiments, an apparatus includes one or more processor cores to execute code; and memory access circuitry to access a memory in connection with execution of the code; wherein one or more of the one or more processor cores is also to generate a memory access topology diagram of the code to determine a first attackable surface of the code; and refactor the code based on the memory access topology diagram to generate refactored code, the refactored code to have a second attackable surface smaller than the first attackable surface.

Any such embodiments may include any of the following aspects. The memory access topology diagram is to reveal interactions between components of the code. Refactoring of the code is to include transformation of a first component into at least a second component and a third component. The first component is accessible by a fourth component and a fifth component, the second component is accessible by the fourth component and not accessible by the fifth component, and the third component is accessible by the fifth component and not accessible by the fourth component. The second component is a specialization of the first component. The second component is a clone of the first component. Access to the first component includes access to a first data structure and a second data structure. The first component includes a first function and a second function, wherein, the first data structure is accessible through the first function and the second function, and the second data structure is accessible through the first function and the second function. The memory access topology diagram is to reveal execution of the fourth component accesses the first data structure and not the second data structure, and execution of the fifth component accesses the second data structure and not the first data structure. The refactoring of the code is to transform the first function to provide access to the first data structure and not to the second data structure, and the second function to provide access to the second data structure and not to the first data structure. Access to the second component includes access to the first data structure and not the second data structure; and access to the third component includes access to the second data structure and not the first data structure. The second component includes the first function and not the second function, and the third component includes the second function and not the first function.

In embodiments, a method includes executing code by a processor; generating, by the processor in response to execution of the code, a memory access topology diagram of the code; and refactoring, by the processor based on the memory access topology diagram, the code to reduce an attack surface of the code.

Any such embodiments may include any of the following aspects. The memory access topology diagram is to reveal interactions between components of the code. The refactoring is to reduce the attack surface by transforming a first component into at least a second component and a third component. Executing the code includes accessing the first component by a fourth component and by a fifth component, and refactoring includes making the second component accessible only by the fourth component and making the third component accessible only by the fifth component. Accessing the first component includes accessing a first data structure and a second data structure. The first component includes a first function and a second function, wherein the first data structure is accessible through the first function and the second function, and the second data structure is accessible through the first function and the second function. The memory access topology diagram is to reveal execution of the fourth component accesses the first data structure and not the second data structure, and execution of the fifth component accesses the second data structure and not the first data structure. The refactoring is to include transforming the first function to provide access the first data structure and not to the second data structure and transforming the second function to provide access to the second data structure and not to the first data structure.

An apparatus may include means for performing any function disclosed herein. In embodiments, an apparatus may include a data storage device that stores code that when executed by a hardware processor causes the hardware processor to perform any method disclosed herein. An apparatus may be as described in the detailed description. A method may be as described in the detailed description. In embodiments, a non-transitory machine-readable medium may store code that when executed by a machine causes the machine to perform a method including any method disclosed herein.

Method embodiments may include any details, features, etc. or combinations of details, features, etc. described in this specification.

While the invention has been described in terms of several embodiments, those skilled in the art will recognize that the invention is not limited to the embodiments described and may be practiced with modification and alteration within the spirit and scope of the appended claims. The description is thus to be regarded as illustrative instead of limiting.

## Claims

1. An apparatus comprising:
decode circuitry to decode a store hardening instruction to mitigate vulnerability to a speculative execution attack; and
store circuitry, coupled to the decode circuitry, to be hardened in response to the store hardening instruction.

2. The apparatus of claim 1, wherein the store circuitry is to be hardened to prevent a store operation from being performed.

3. The apparatus of claim 1, wherein the store circuitry is to be hardened to prevent a store operation from leaving a side channel based on data to be stored by the store operation.

4. The apparatus of claim 1, wherein the store circuitry is to be hardened to prevent execution of a dependent instruction, wherein the dependent instruction is dependent on data to be stored by a store operation.

5. The apparatus of claim 1, wherein the store circuitry is to be hardened to prevent execution of a dependent instruction from leaving a side channel, wherein the dependent instruction is dependent on store-to-load forwarded data from a store operation.

6. The apparatus of claim 1, wherein the store circuitry is to be hardened to prevent allocation of a cache line for data to be stored by a store operation.

7. The apparatus of claim 1, wherein hardening of the store circuitry is to be relaxed in response to retirement of a store instruction.

8. The apparatus of claim 1, wherein hardening of the store circuitry is to be relaxed in response to a store operation becoming non-speculative.

9. The apparatus of claim 1, wherein hardening of the store circuitry is to be relaxed in response to a store operation becoming non-speculative based on resolution of a branch condition.

10. The apparatus of claim 1, wherein hardening of the store circuitry is to be relaxed in response to a store operation becoming non-speculative based on retirement of a branch instruction.

11. The apparatus of claim 1, wherein the store circuitry is to be hardened to prevent a load operation from bypassing a store operation, to prevent speculative data from being stored, to prevent a speculative store bypass, or to prevent dependence of store latency on data to be stored.

12. A method comprising:
decoding, by a processor, a store hardening instruction to mitigate vulnerability to a speculative execution attack; and
hardening, in response to the store hardening instruction, store circuitry in the processor.

13. The method of claim 12, further comprising:
decoding a store instruction;
performing a first operation in response to the store instruction;
preventing a second operation in response to the store operation, wherein preventing the second operation prevents the store instruction from leaving a side channel.

14. A non-transitory machine-readable medium storing a plurality of instructions, including a store hardening instruction and a store instruction, wherein execution of the plurality of instructions by a machine causes the machine to perform a method comprising:
hardening store circuitry in the machine in response to the store hardening instruction;
performing a hardened store operation speculatively in response to the store instruction;
retiring the store instruction; and
relaxing hardening of the store circuitry in response to retiring the store instruction.

15. The non-transitory machine-readable medium of claim 14, wherein the plurality of instructions includes a dependent instruction, the dependent instruction is dependent on data to be stored by the store instruction, and hardening the store circuitry includes preventing execution of the dependent instruction.
